# EUROPEAN PATENT APPLICATION

(11) **EP 2 523 405 A1**
(43) Date of publication of application: **14.11.2012**
(21) Application number: 11731844.4
(22) Date of filing: 07.01.2011
(51) Int. Cl.: H04L 12/56

(54) **COMMUNICATION SYSTEM, FORWARDING NODES, PATH MANAGEMENT SERVER AND COMMUNICATION METHOD**

(30) Priority: 08.01.2010 JP 2010002875
(71) Applicant: NEC Corporation, Tokyo 108-8001 (JP)
(72) Inventor: AWANO, Jun, Tokyo 108-8001 (JP)
(74) Representative: Robson, Aidan John
(86) International application number: PCT/JP2011/050182
(87) International publication number: WO 2011/083846

(57) **Abstract**

A communication system comprises: a path management server that generates a plurality of forwarding path information items each includes a sequence of identifiers, each of which identifies a communication interface provided in each of a plurality of forwarding nodes on a forwarding path in a data forwarding network or a link established between the forwarding node and a neighboring node thereof; and a forwarding node that, in accordance with at least one of the plurality of forwarding path information items, executes a packet forwarding processing of a packet with a header including the plurality of forwarding path information items. The communication system that can be implemented using a simplified forwarding table, and moreover can be applied to path control (including an alternative path) of data packets.

## Description

### TECHNICAL FIELD

### (Reference to Related Application)

The present invention is based upon and claims the benefit of priority of Japanese Patent Application No. 2010-002875, filed on January 8, 2010, the disclosure of which is incorporated herein in its entirety by reference. The present invention relates to a communication system, a forwarding node, a path management server, and a communication method, and in particular, relates to a communication system, a forwarding node, a path management server, and a communication method, which implement communication by forwarding a packet by forwarding nodes arranged in a network.

### BACKGROUND ART

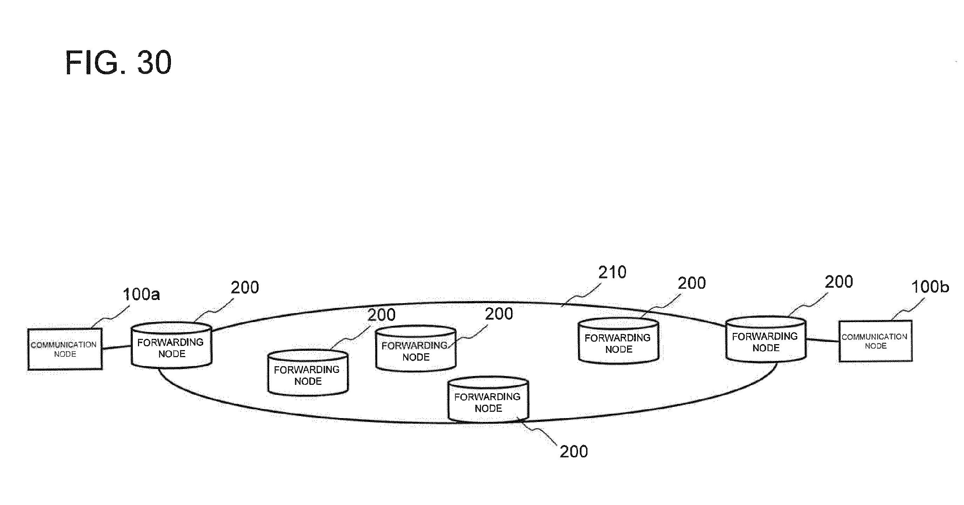

Fig. 30 shows a network configuration using IP (Internet Protocol). In Fig. 30, communication nodes 100 (communication node 100a and communication node 100b) are communication nodes that perform communication using IP. When a forwarding node 200 receives an IP packet transmitted by a communication node 100, it determines a forwarding destination of the IP packet and forwards the IP packet to the determined forwarding destination. Forwarding nodes repeat this, and ultimately forward the IP packet to a communication node that is the destination.

In determining the forwarding destination of the IP packet, the forwarding node 200 uses a routing table stored internally. The routing table is a table indicating which network destination packet should be transmitted, though which interface, to a forwarding node that takes on subsequent forwarding processing; and a corresponding destination network address, subsequent forwarding destination IP address, and destination interface are listed in the table as one entry. The entry includes information outside of the abovementioned information, but here this is omitted for simplicity.

The network address is an address obtained by extracting a number of upper bits of an IP address, and is expressed in a format such as 192.168.1.0/24. In this case, the upper 24 bits of the address are the network address, and addresses from 192.168.1.1 to 192.168.1.255 are included in the network. In this case, 24 is called a prefix length.

When appropriate route information is determined from the routing table, the forwarding node 200 uses a method known as a longest match method. This is a method in which a destination address of the IP packet and respective entries of the routing table are compared to determine an entry where there is a match of a longer number of bits from an upper bit of the destination address.

The routing table is set in advance by a method such as a manual setting in the forwarding nodes 200, or automatically by a protocol for exchanging route information called a routing protocol.

In an IP network, packets are forwarded by the above forwarding method, but there is a problem in that, in this case, packet forwarding depends on the routing table of the respective forwarding nodes, and paths cannot be completely controlled. Furthermore, since the forwarding destination is determined by only the destination address, there is a problem in that minute path control is not possible due to differences concerning which application the communication is performed by, or of source address.

As a way of performing the abovementioned path control, there is a method known as source routing. Source routing is a method in which a node that is a source (for example, a communication node 100a) explicitly lists up, in a packet to be transmitted, addresses of forwarding nodes 200 that are desired to be in a forwarding path. In this case, the communication node 100a can forward a packet to a node (for example, communication node 100b) that is a destination by a forwarding path intended by an application or the like that is being used.

Furthermore, in packet forwarding technology known as MPLS (Multi-Protocol Label Switching) also, technology exists that corresponds to source routing. MPLS is a technology in which a label is assigned to a received packet, and forwarding processing is performed based on the label.

Assigning the label is performed when, after the packet is received by a forwarding node arranged at an edge (boundary) of an MPLS network, the packet is forwarded, and forwarding nodes inside the MPLS network thereafter repeat forwarding processing while re-attaching the label each time the packet is forwarded. When forwarding to an external network by a forwarding node arranged at the edge of the MPLS network, the label is removed by the forwarding node.

In the MPLS, technology corresponding to source routing is CR-LDP (Constraint Routing - Label Distribution Protocol). LDP is a protocol for exchanging the label among forwarding nodes in the MPLS network, and with an object of traffic engineering or the like, LDP, which has an object of strictly indicating a packet forwarding path, is CR-LDP.

Patent Document 1 discloses a packet communication method in which, in the abovementioned source routing technology, a plurality of relay nodes are contained, being positioned in parallel in a routing header, and based on a prescribed policy of the relay nodes, one relay node is selected from among the plurality of relay nodes that are positioned in parallel.

Furthermore, similarly with regard to performing path control, Non-Patent Documents 1 and 2 propose a technology known as OpenFlow. In OpenFlow, communication is taken as end-to-end flow, and path control, return from failure, load balancing, and optimization are performed in flow units. An OpenFlow switch functioning as a forwarding node is provided with a secure channel for communication with an OpenFlow controller, and operates according to a flow table in which appropriate addition or rewriting is ordered by an OpenFlow controller. In the flow table are definitions of sets of rules for collation with packet headers, actions defining processing content, and flow statistical information.

For example, when an OpenFlow switch receives a first packet, an entry is searched for, which has a rule (FlowKey) matching header information of the received packet, from the flow table. As a result of the search, in a case where an entry matching the received packet is found, the OpenFlow switch executes processing content described in an actions field of the entry, for the received packet. On the other hand, as a result of the search, in a case where an entry matching the received packet is not found, the OpenFlow switch forwards the received packet to the OpenFlow controller via a secure channel, requests determination of a path of the packet based on source and destination of the received packet, receives a flow entry for realizing this, and updates the flow table.

[Patent Document 1]
   Japanese Patent Kokai Publication No. JP2004-153318A

[Non-Patent Document 1]
   Nick McKeown, et al., "OpenFlow: Enabling Innovation in Campus Networks," [online], [search conducted December 14, 2009] Internet URL: http://www.OpenFlowswitch.org//documents/OpenFlow-wp-latest. pdf
[Non-Patent Document 2]
   "OpenFlow: Switch Specification" Version 0.9.0. (Wire Protocol 0x98), [search conducted December 14, 2009] Internet URL: http://www.OpenFlowswitch.org/documents/openflow-spec-v0.9.0.pdf

### DISCLOSURE OF THE INVENTION

### PROBLEMS TO BE SOLVED BY THE INVENTION

The entire disclosures of the abovementioned Patent Document 1 and Non-Patent Documents 1 and 2 are incorporated herein by reference thereto. The following analysis is given by the present invention. Forwarding nodes based on IP technology, and more specifically, routing tables stored by switches and routers, have been steadily becoming bigger, and a problem called routing information explosion has been pointed out. As a result of the increase in routes, the required amount of memory for holding routing tables increases, and, since time is taken for route determination processing, packet forwarding processing capability declines.

In MPLS, route determination time can be reduced in comparison with IP routing, but if varied forwarding policies are applied, the number of entries in a routing table increases, leading to a decline in processing capability.

As described above, curtailing the number of entries in a routing table is an important problem for forwarding nodes from the viewpoint of memory reduction and improvement in processing performance.

However, in the abovementioned source routing, since addresses of forwarding nodes 100 are contained in a packet, there is a problem in that a net data amount that can be included in a packet decreases. Accordingly, source routing is limited to certain applications such as network tests and the like, and is not used in packets (referred to below as 'data packets') that are used in communication such as with applications. It is to be noted that that information outside of net data is referred to as overhead. More specifically, the abovementioned problem can be restated as a problem where the overhead becomes large.

Furthermore, in packets used in CR-LDP, information of forwarding nodes for each forwarding (for each one hop) is included, similar to the source routing in the abovementioned IP routing. As forwarding node information, for example IPv4 addresses or IPv6 addresses are used, but in this case also, when all forwarding node information is listed up within the forwarding path, the information increases, so that use outside of control packets is not realistic. As a result, when the forwarding path of a data packet is strictly determined, there arises a necessity to set the forwarding information for each forwarding policy inside the forwarding node, by the CR-LDP or the like.

A method of Patent Document 1 is the abovementioned source routing itself, and there is a problem in that net data amount that can be included in a packet is small.

Furthermore, in the method of Non-Patent Documents 1 and 2, each forwarding node has to refer to a flow table, as in the method of referring to the routing table mentioned at the start of this specification, and it is considered that, accompanying an increase of entries, latency (delay time) occurs and loads are imposed on the nodes.

As in the above description, in the method of adding entries for each of various types of forwarding policy to a routing table or flow table, there is a problem of processing loads for adding, updating, and removing entries, and of increase in the information amount in the routing table; and in source routing or the like that explicitly indicates forwarding routes there is a problem in that the overhead becomes large and is not suitable for transmission of data packets.

The present invention has been carried out in view of the abovementioned circumstances and it is an object of the invention to provide a communication system, a forwarding node, a path management server, a communication method, and a program, that can be implemented using a simplified forwarding table, and moreover enable path control of data packets, particularly switching to an alternative path in accordance with traffic load conditions or conditions where failure occurs in the forwarding path.

### MEANS TO SOLVE THE PROBLEMS

According to a first aspect of the present invention, there is provided a communication system in which a forwarding node of a data forwarding network performs a forwarding processing of a packet with a plurality of forwarding path information items including information that can uniquely designate a packet forwarding path, using at least one of the plurality of forwarding path information items; that is, a communication system comprising:
a path management server that generates a plurality of forwarding path information items each includes a sequence of identifiers, each of which identifies a communication interface provided in each of a plurality of forwarding nodes on a forwarding path in a data forwarding network or a link established between the forwarding node and a neighboring node thereof; and
a forwarding node that, in accordance with at least one of the plurality of forwarding path information items, executes a packet forwarding processing of a packet with a header including the plurality of forwarding path information items.

According to a second aspect of the present invention, there is provided a forwarding node, connected to a path management server that generates a plurality of forwarding path information items each includes a sequence of identifiers, each of which identifies a communication interface provided in each of a plurality of forwarding nodes on a forwarding path in a data forwarding network or a link established between the forwarding node and a neighboring node thereof, wherein
the forwarding node, in accordance with at least one of the plurality of forwarding path information items, executes a packet forwarding processing of a packet with a header including the plurality of forwarding path information items.

According to a third aspect of the present invention, there is provided a path management server that, upon receiving a path request from the forwarding node described above, replies, based on information included in the path request, with a plurality of forwarding path information items by which the packet is made to reach a communication partner.

According to a fourth aspect of the present invention, there is provided a communication method comprising:
by a path management server in a data forwarding network, upon receiving a path request from a forwarding node, replying, based on information included in the path request, with a plurality of forwarding path information items each includes a sequence of identifiers, each of which identifies a communication interface provided in each of a plurality of forwarding nodes on a forwarding path in the data forwarding network or a link established between the forwarding node and a neighboring node thereof; and
by a forwarding node group that is on a forwarding path selected from among the plurality of forwarding path information items and includes the forwarding node, sequentially forwarding the packet in accordance with the selected forwarding path information. The present method is linked with specific instruments, referred to as a forwarding node and a path management server, as described above.

According to a fifth aspect of the present invention, there is provided a program that is executed on a computer configuring the abovementioned forwarding nodes and/or path management server. It is to be noted that this program can be recorded in a computer-readable storage medium. That is, the present invention can be embodied as a computer program product.

### EFFECT OF THE INVENTION

According to the present invention, path control is enabled in which switching to an alternative path is possible with little pressure on net data amount load or load increase on forwarding nodes in a path. A reason for this is that a configuration is used in which there is added, to a header, a plurality of forwarding path information items each includes a sequence of identifiers, each of which identifies a communication interface provided in each of the forwarding nodes on a forwarding path in a data forwarding network or a link established between the forwarding node and a neighboring node thereof, and the forwarding node is made to interpret and execute the forwarding path information items.

### BRIEF DESCRIPTION OF THE DRAWINGS

Fig. 1 is a diagram showing a communication system according to a first exemplary embodiment of the present invention;
Fig. 2 is a diagram showing a configuration of an edge forwarding node of the communication system according to the first exemplary embodiment of the present invention;
Fig. 3 is a diagram showing a forwarding table recorded in a recording unit of an edge forwarding node and an internal forwarding node of the first exemplary embodiment of the present invention;
Fig. 4 is a diagram showing an example of a mode of assigning a path information header, an alternative path start position information header, and an alternative path information header to a packet;
Fig. 5 is an example of a format of a path information header added to an edge forwarding node;
Fig. 6 is a diagram showing a format of a local ID (example without extension) in a path information header of Fig. 5;
Fig. 7 is a diagram showing a format of a local ID (example with extension) in the path information header of Fig. 5;
Fig. 8 is an example of a format of an alternative path start position information header added in an edge forwarding node;
Fig. 9 is an example of a format of an alternative path information header added in an edge forwarding node;
Fig. 10 is a diagram showing a configuration of an internal forwarding node of the communication system according to the first exemplary embodiment of the present invention;
Fig. 11 is a diagram showing a configuration of a path management server of the communication system according to the first exemplary embodiment of the present invention;
Fig. 12 is a diagram showing neighbor information notified by respective forwarding nodes;
Fig. 13 is an example of a network topology configured from the neighbor information of Fig. 12;
Fig. 14 is a flowchart showing an operation when an edge forwarding node receives a packet;
Fig. 15 is a flowchart showing details of forwarding processing of Fig. 14;
Fig. 16 is a flowchart showing details of alternative path forwarding decision processing of Fig. 15
Fig. 17 is a flowchart showing an operation when an internal forwarding node receives a packet;
Fig. 18 is a flowchart showing an operation in which an edge forwarding node and an internal forwarding node transmit neighbor information notification;
Fig. 19 is a flowchart showing an operation when a path management server receives neighbor information notification;
Fig. 20 is a flowchart showing an operation when a path management server requests path information;
Fig. 21 is a sequence diagram showing flow of packet forwarding when a communication node of the first exemplary embodiment of the present invention transmits a packet to an opposing communication node;
Fig. 22 is a sequence diagram showing flow of packet forwarding (with one forwarding failure) when a communication node of the first exemplary embodiment of the present invention transmits a packet to an opposing communication node;
Fig. 23 is a sequence diagram showing flow of packet forwarding (with two forwarding failures) when a communication node of the first exemplary embodiment of the present invention transmits a packet to an opposing communication node;
Fig. 24 is a diagram showing a configuration of an edge forwarding node of the communication system according to a second exemplary embodiment of the present invention;
Fig. 25 is a diagram showing an example of a forwarding failure path information table recorded in a recording unit of an edge forwarding node of the second exemplary embodiment of the present invention;
Fig. 26 is a diagram showing a format (example without extension) of a local ID in a path information header added in an edge forwarding node of the second exemplary embodiment of the present invention;
Fig. 27 is a diagram showing a configuration of an internal forwarding node of the communication system according to the second exemplary embodiment of the present invention;
Fig. 28 is a flowchart showing details of alternative path forwarding decision processing in the second exemplary embodiment of the present invention;
Fig. 29 is a sequence diagram showing flow of packet forwarding when a communication node of the second exemplary embodiment of the present invention transmits a packet to an opposing communication node; and
Fig. 30 is a diagram showing a communication system performing packet forwarding, as a description of background technology.

### PREFERRED MODES FOR CARRYING OUT THE INVENTION

First, an outline of the present invention is described. A forwarding node in a communication system of the present invention, in a case where a header including a plurality of forwarding path information items is included in a received packet, selects at least one of the plurality of forwarding path information items to perform forwarding processing.

Here, the forwarding path information can be a sequence of identifiers arranged in forwarding order that enables each of the forwarding nodes in the data forwarding network to identify communication interfaces that are forwarding destinations. It is sufficient if the identifiers have a length that is adequate for uniquely ensuring a forwarding destination in each forwarding node.

The number of interfaces provided in the forwarding nodes is very small in comparison to IP addresses and the like. The identifiers forming the forwarding path information in the present invention, different from source routing mentioned at the start of the present specification, can be described by a short information item, 1 byte long, for example, so that the influence on net data amount is minor. Accordingly, it is possible to contain information describing the forwarding path for each 1 hop, with regard to not only some control packets, but all packets, such as data packets, and high level forwarding control becomes possible.

Furthermore, it is sufficient if the respective forwarding nodes hold correspondence relationships between the identifiers and communication interfaces of forwarding destinations, and since there is no necessity to hold a forwarding table such as a routing table mentioned at the introductory part of the instant specification, having a large number of items, it is possible to reduce the amount of memory. Furthermore, since determination of a forwarding destination can be performed simply and quickly, it is possible to reduce packet forwarding delay also. In addition, CPU processing power of the respective forwarding nodes can be low as well.

It is to be noted that addition and removal of the header including the plural forwarding path information items described above may be performed as follows, among forwarding nodes, in a forwarding node (edge forwarding node) disposed at a boundary with an external network. The edge forwarding node, which receives a packet from the external network, acquires a forwarding path of the packet from information recorded in a separately provided path management server or the edge forwarding node, and adds a header containing the plural forwarding path information items to the received packet. Furthermore, the edge forwarding node removes the header in a case of transmitting a packet to the external network.

Regarding which forwarding path information to use, among the plurality of forwarding path information items, the respective forwarding nodes may be made to make a judgment, but it is possible to apply a priority order by adding a storage order of the forwarding path information items or separate priority order information. The following modes are possible in the present invention.

### (Mode 1)

As in the communication system according to the first aspect.

### (Mode 2)

In the communication system, the packet may store path selection information indicative of which of the plurality of forwarding path information items is utilized, and
the forwarding node may refer to the path selection information to determine forwarding path information to be used in the packet forwarding processing.

### (Mode 3)

In the communication system, the plurality of forwarding path information items may include information for determining a forwarding node at which branching is possible from one forwarding path to another forwarding path, and
a forwarding node at a position at which the branching is possible may select at least one of the plurality of forwarding path information items.

### (Mode 4)

In the communication system, the packet may store forwarding result information indicative of a forwarding result when a forwarding node performs a forwarding processing based on forwarding path information determined by the path selection information; and
the forwarding node may refer to the forwarding result information updated according to a result of forwarding processing to select forwarding path information in which there is no failure in forwarding.

### (Mode 5)

In the communication system, the packet may store branch point information indicative of a member of forwarding nodes branchable from a present forwarding path to a different forwarding path(s), on a forwarding path that extends up to a forwarding node that has received the packet; and
the forwarding node may reduce the branch point information when a forwarding processing is failed and determine whether or not to drop the packet using the branch point information.

### (Mode 6)

In the communication system, upon changing a forwarding path, the packet may store information that identifies forwarding path information before the change; and
the forwarding node may use the forwarding path information before the change included in the packet to perform a return processing to a forwarding path before the change, and to search for a further branch destination.

### (Mode 7)

In the communication system, the forwarding node may further comprise a forwarding result recording unit that records forwarding path information where a forwarding failure has occurred; and
upon receiving a packet, the forwarding node may compare the forwarding path information contained in the packet and the recorded forwarding path information where a forwarding failure has occurred, and when a forwarding failure is expected, switch from a present forwarding path to another forwarding path.

### (Mode 8)

As in the forwarding node according to the second aspect.

### (Mode 9)

As in the path management server according to the third aspect.

### (Mode 9)

As in the communication method according to the fourth aspect.

### (Mode 10)

As in the program according to the fifth aspect.
It is to be noted that the forwarding node, the path management server, the communication method, and the program, as described in the abovementioned second to fifth aspects, similar to the communication system of Mode 1, can be expanded to content of Mode 2 to Mode 7, with regard to respective component elements and steps.

In the following exemplary embodiment, a forwarding path that is second or below in priority order is termed as an 'alternative forwarding path'. This type of alternative forwarding path is used when there is a failure in forwarding using a certain forwarding path. For example, in a case of a failure in forwarding processing of a certain packet, based on forwarding path information inside the packet that has failed in the forwarding, it is possible to forward in a reverse direction of the forwarding path, and re-transmit the packet using an alternative forwarding path to have the packet reach an edge forwarding node or a forwarding node that is a branch point of a plurality of forwarding paths. Furthermore in the plurality of forwarding path information items it is possible to utilize a configuration that uses, as path selection information, a header indicating the existence of this type of alternative path (an alternative path start position header to be described later is an example thereof), whether or not the branch point is present (an 'Ex' field within a path information header to be described later is an example thereof), information indicating a forwarding result (an 'F' field within a path information header to be described later is an example thereof), identification information of an alternative path to be used next (a value of an 'Alt' field within a path information header to be described later is incremented or decremented), or a state of a data forwarding network (failure, load increase, traffic state or the like, of a forwarding destination node).

### <First Exemplary Embodiment>

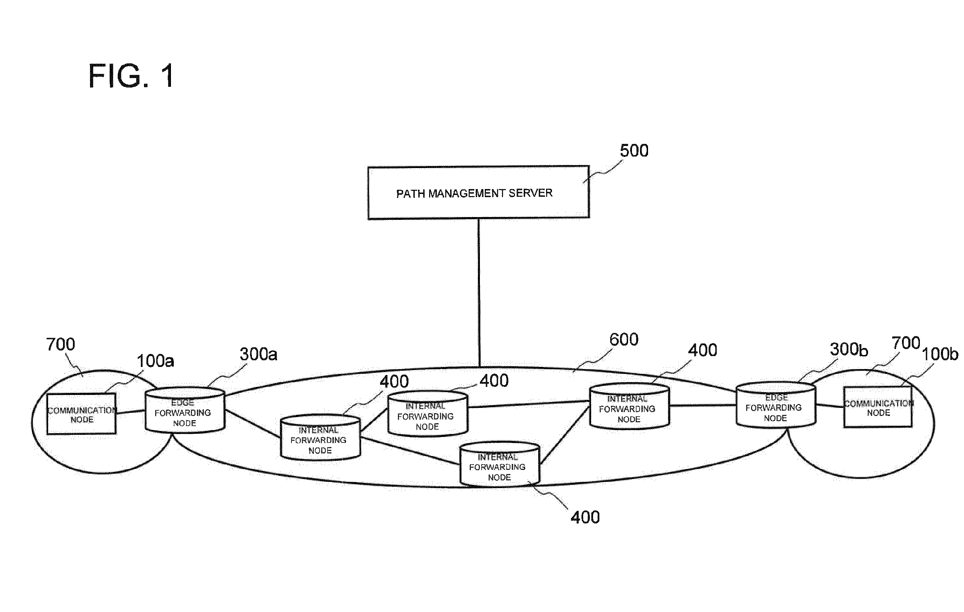

Next, a detailed description is given concerning a first exemplary embodiment of the present invention making reference to the drawings. Fig. 1 is a diagram showing a communication system according to the first exemplary embodiment of the present invention. Referring to Fig. 1, communication nodes 100a and 100b, edge forwarding nodes 300a and 300b, internal forwarding nodes 400; and a path management server 500 are shown.

A data forwarding network 600 is a network that performs forwarding processing of a packet by a method of the present invention, and an external network 700 is a network that performs packet forwarding processing by a method different from the network 600, as in an IP network or the like. However, when a forwarding method similar to the network 600 is used, in a case of a different manager the external network 700 is possible. Here, a description is given with the external network 700 as an IP network. The external network 700 is connected to the data forwarding network 600 via the edge forwarding nodes 300a and 300b.

The communication nodes 100a and 100b are communication nodes belonging to respective external networks 700, and transmission and reception of packets is performed in accordance with a packet forwarding method of the external networks 700. That is, in the present exemplary embodiment, these are nodes for performing transmission and reception of IP packets. Since the communication nodes 100a and 100b are similar to a general IP node, a detailed description thereof is omitted.

The edge forwarding nodes 300a and 300b are disposed between the data forwarding network 600 and the external network 700, and in a case of receiving a packet transmitted from the communication nodes 100a or 100b, assign a header containing forwarding path information, to be described later, and alternative forwarding path information, and in addition, forward the packet to an internal forwarding node 400 in the data forwarding network 600 based on the plurality of forwarding path information items in the header.

Furthermore, in a case of receiving a packet to which is assigned a header containing the forwarding path information or the like from the internal forwarding node 400, and a decision being made from the forwarding path information or the alternative forwarding path information in the header thereof that this is a final node in a forwarding path, the edge forwarding nodes 300a and 300b remove the path information header from the received packet, and thereafter transmit the packet to the communication nodes 100a and 100b of the external network 700.

It is to be noted that in the following a description is given in which the forwarding path information is acquired from the path management server 500, but there is no limitation thereto, and the forwarding path information may be generated from information stored in an edge forwarding node 300.

A configuration is described below in the order of: the edge forwarding node 300a (300b), the internal forwarding nodes 400, and the path management server 500, of the present exemplary embodiment.

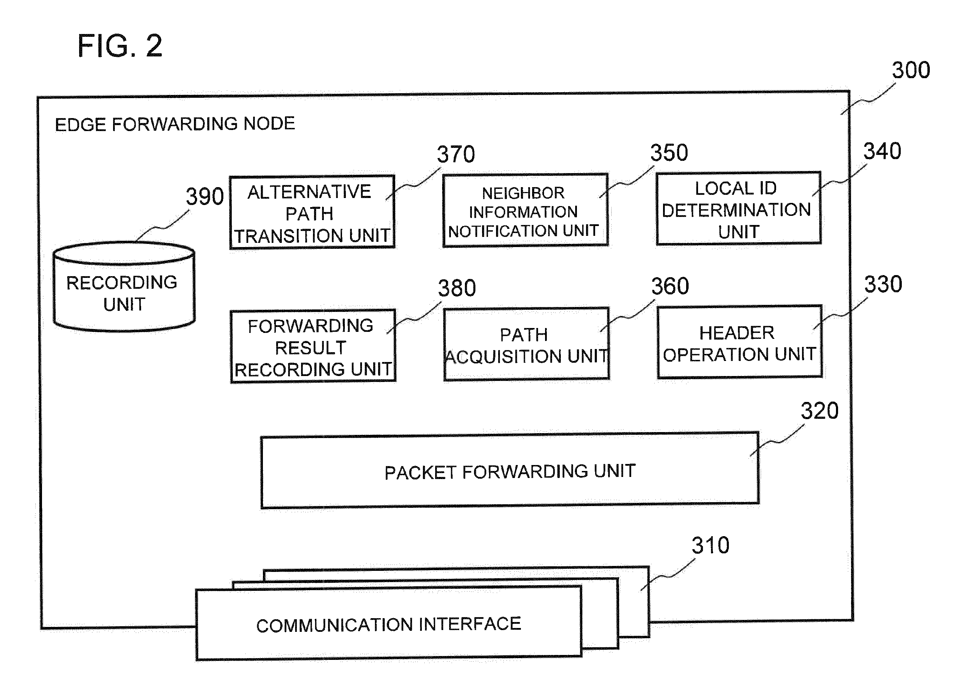

Fig. 2 is a diagram showing a configuration of the edge forwarding nodes 300a and 300b of Fig. 1. As shown in Fig. 2, an edge forwarding node 300 comprises communication interfaces 310, a packet forwarding unit 320, a header operation unit 330, a local ID determination unit 340, a neighbor information notification unit 350, a path acquisition unit 360, an alternative path transition unit 370, a forwarding result recording unit 380, and a recording unit 390.

A communication interface 310 is an interface that performs transmission and reception of packets, and is realized by a Network Interface Card (NIC) such as a LAN card or the like, and software (a driver) for driving the card. However, there is no limitation to only a physical interface as mentioned above, and a logical interface is also possible. In this case, it is possible to use one physical interface and make it operate as if a plurality of interfaces were provided.

The edge forwarding node 300 comprises one or more physical interfaces as described above, or a logical interface. Each communication interface 310 is connected with an internal forwarding node 400 within the data forwarding network or another edge forwarding node 300. Furthermore, some of the communication interfaces 310 are also connected to a communication node 100 of the external network 700. Furthermore, some of the communication interfaces 310 are also connected to the path management server 500. The path management server 500 may be disposed within the data forwarding network 600, and connections may be via a dedicated network of the path management server 500.

The packet forwarding unit 320, in a case where a header containing forwarding path information and the like is assigned to a received packet, is provided with a function of forwarding a packet based first on a decision as to whether or not to transition to an alternative path in the alternative path transition unit 370 (details to be described later), and in a case of transitioning, after finishing preparations therefor, based on forwarding path information or alternative forwarding path information within the header, and information recorded in the recording unit 390.

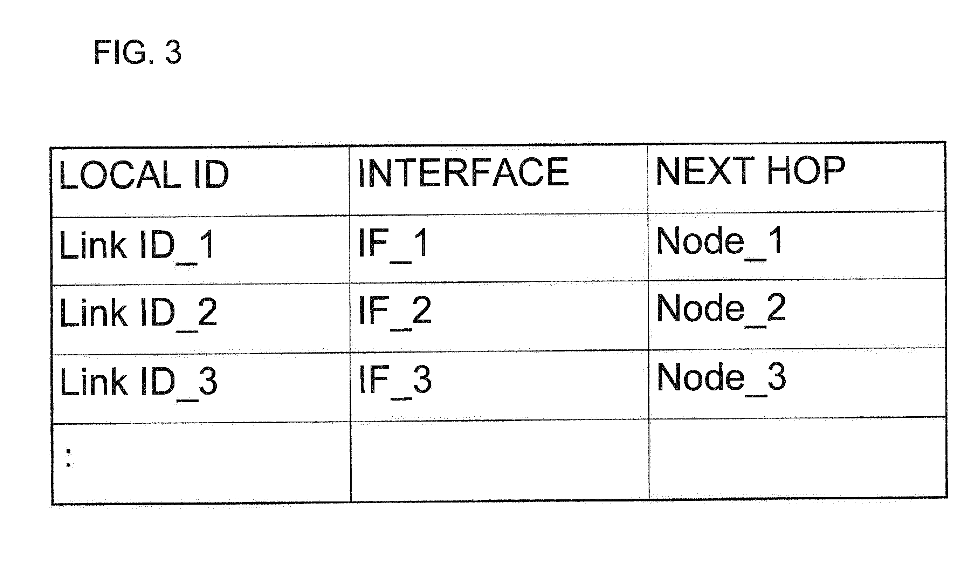

A forwarding table is recorded in the recording unit 390, as described later using Fig. 3, with a local ID, a communication interface that forms a forwarding destination, and information corresponding to an identifier of an internal forwarding node 400 or a neighboring edge forwarding node 300 connected with the communication interface 310, as one entry. The packet forwarding unit 320 can forward a packet to a next node corresponding to the local ID.

It is to be noted that in the following, the edge forwarding node 300 and the internal forwarding node 400 are generically referred to as a forwarding node. Furthermore, nodes that are mutually directly connected (communication node 100, edge forwarding node 300, internal forwarding node 400) are referred to as neighboring nodes.

Fig. 3 is an example of a forwarding table recorded in a recording device of the edge forwarding node 300 and the internal forwarding node 400 (equivalent to the recording unit 390 or the recording unit 470 described later). In the present exemplary embodiment as shown in Fig. 3, as a local ID, an identifier (link ID) is used that is assigned to a physical link or a logical link, between neighboring forwarding nodes or between the edge forwarding node 300 and the communication node 100a (100b). Therefore, the link ID is set in a field 'local ID'. In a field 'interface' indicating a communication interface that is a forwarding destination, information that identifies the communication interface 310 connected to a link to which the link ID is assigned, is set. Furthermore, in the example of Fig. 3, an identifier of a forwarding node connected to the link is set in a field 'next hop' indicating information of a neighboring node.

It is to be noted that in a case where the communication interface, which is a forwarding destination, is connected to a communication node 100a (100b) that performs communication by IP, an IP address of the communication node 100a (100b), for example, can be used as the identifier of the 'next hop' field. On the other hand, in a case of the edge forwarding node 300 or the internal forwarding node 400, a uniquely assigned identifier (for example, Node_1 or Node_2 of Fig. 3) is used. The identifier of the forwarding node may be set in advance, or a method may be used in which the identifier is set from an external node such as the path management server 500 or the like. Furthermore, the identifier of the 'next hop' field need not necessarily be used in forwarding processing and can be omitted.

It is possible to use information identifying the communication interface 310 as the local ID. Since it is desirable that information identifying the communication interface 310 be described using a small amount of information (for example, about one to two bytes), in a case where the information for identifying the communication interface 310 is long (for example, in a case where a communication interface name or the like is used), another identifier that can be described with a short piece of information such as one byte or the like is separately assigned and applied as the local ID. It is to be noted that where no particular description is given herein, the description is for using a link ID as the local ID.

Since there are basically about several tens of communication interfaces, which are provided with an L3 switch or router that performs general layer 3 forwarding processing, and an L2 switch that performs layer 2 forwarding processing, the link identifier and the communication interface identifier can be adequately expressed by one byte. In a case of a long item of information where an actual communication interface identifier requires several bytes, an identifier of a range than can be contained in one byte or in two bytes may be separately created and associated with the communication interface identifier.

It is to be noted that the forwarding table of Fig. 3 is shown as an example for concisely describing the present invention, and other information may be further associated with the respective entries and recorded.

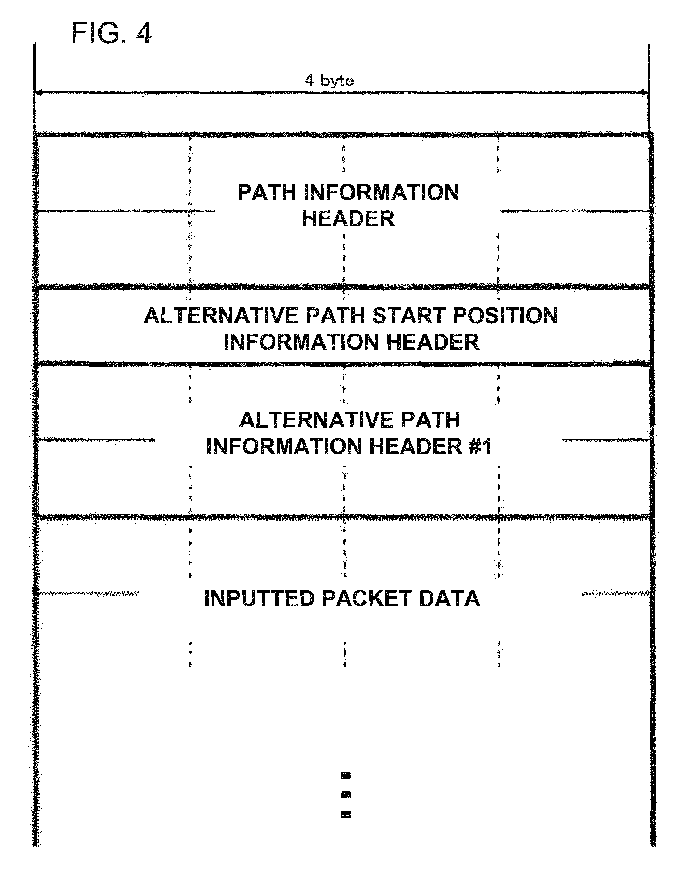

Fig. 4 is a diagram showing an example of a mode of assigning to a packet a path information header, an alternative path start position information header, and an alternative path information header, by the edge forwarding node 300. In the example of Fig. 4 the path information header is assigned to a head portion of the packet. In addition, in a case where the alternative path information is included, the assigning is in the order of the path information header, the alternative path start position information header (details are described later), and the alternative path information header. It is possible to assign a plurality of alternative path information headers, and in a case of assigning a plurality thereof, following a first alternative path information header, a subsequent alternative path information header is allocated.

There is no limitation to the number of alternative path information headers, but since an exemplary object of the present invention is to avoid pressurizing the net data amount described previously, it is desirable to provide an upper limit to the number of alternative path information headers. Below, in the present exemplary embodiment, a description is given where at most three alternative path information headers can be added.

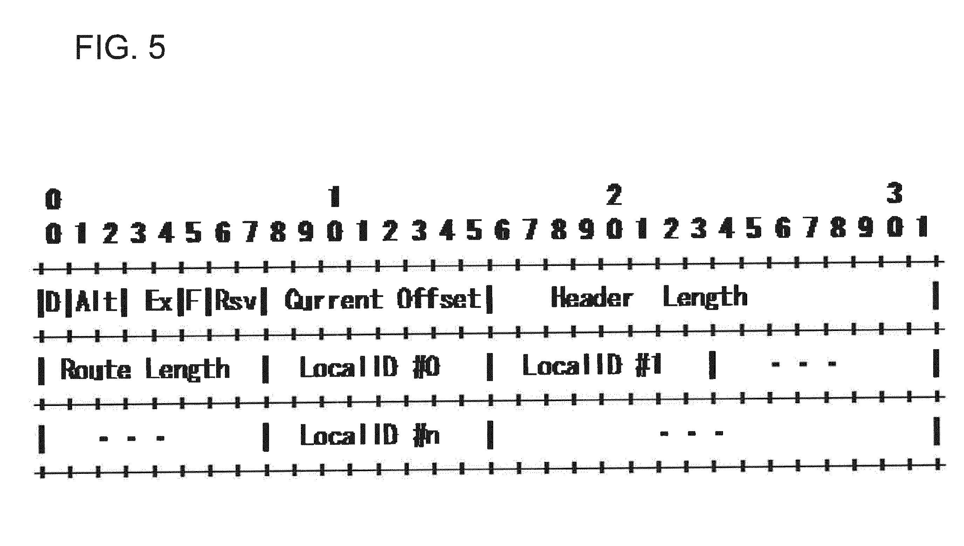

Fig. 5 is one example of a format for a path information header used in the present exemplary embodiment. In Fig. 5, 'D' (= Direction) indicates a forwarding direction. For example, '0' indicates a normal direction with respect to forwarding, and '1' indicates a reverse direction. In 'Alt' (= Alternate Route Number) a value is set, indicating the alternative path information referred to at a time of forwarding. In the present exemplary embodiment, since 'Alt' is 2 bits, the set value is 0 to 3. When 'Alt' is 0, an alternative path is not used, and forwarding processing is performed making reference to the path information of Local ID #n' and after. On the other hand, a case where 'Alt' is 1 to 3 indicates performing forwarding processing by making reference to alternative paths described in alternative path information headers corresponding to respective values thereof. A detailed description is given later concerning the alternative path information header.

'Ex' (= Alternate Route Existence) in Fig. 5 indicates the number of branch points to alternative paths with regard to a forwarding path attempting to perform forwarding processing of the packet at present. In the forwarding node, in forwarding of the packet, in a case where it is possible to branch to an alternative path from the node itself, the 'Ex' field is incremented. Therefore, in a case where there is no alternative path to the forwarding node executing the present forwarding processing, the value is '0'. In case where there is an alternative path, the number of branch points to existing alternative paths is set. 'Ex' is decremented in a case of transitioning to an alternative path.

'F' (Failure Flag) is set to '1' in a case where the forwarding node fails for some reason in forwarding processing to a forwarding node that is a subsequent hop.

'Rsv' (Reserved) is a reserved field, and is not used in exemplary embodiments of the present invention. Therefore, a constant value of 0 or the like is set therein.

In 'Current Offset', offset information is set for local ID information to be referred to when forwarding (units are bytes). The value is indicated by the number of offset bytes from 'Local ID #0'. When a path information header is given by the edge forwarding node 300, the value of the 'Current Offset' is set to '0'.

'Header Length' indicates the length of the header after 'Route Length' in number of bytes. In the present exemplary embodiment, in consideration of packet formation (alignment), a four byte unit value is used. In a case where the end of the net data does not fit a four byte unit boundary, stuffing (padding) is performed (dummy information set to 0 is post-positioned).

'Route Length' indicates the total number of bytes of path information indicated by a list of local IDs following thereafter.

A local ID, which is to be referred to as a forwarding destination by the internal forwarding node 400 or the edge forwarding node 300 of the n-th hop is set in 'Local ID #n'. The format of the abovementioned Fig. 5 is only an example, and information in various types of modified formats may be contained.

As described above, by using a local ID that is unique within a forwarding node or in a local range among neighboring forwarding nodes, as information of the forwarding path, it is possible to reduce the amount of information in the path information header.

It is to be noted that in the present exemplary embodiment, each of the local IDs has one byte, but there is a possibility of not being able to represent a logical link by one byte. Furthermore, in a case where information relating to alternative paths (priority order, selection conditions, and the like) is set to respective path information, consideration may be given to when one byte is insufficient.

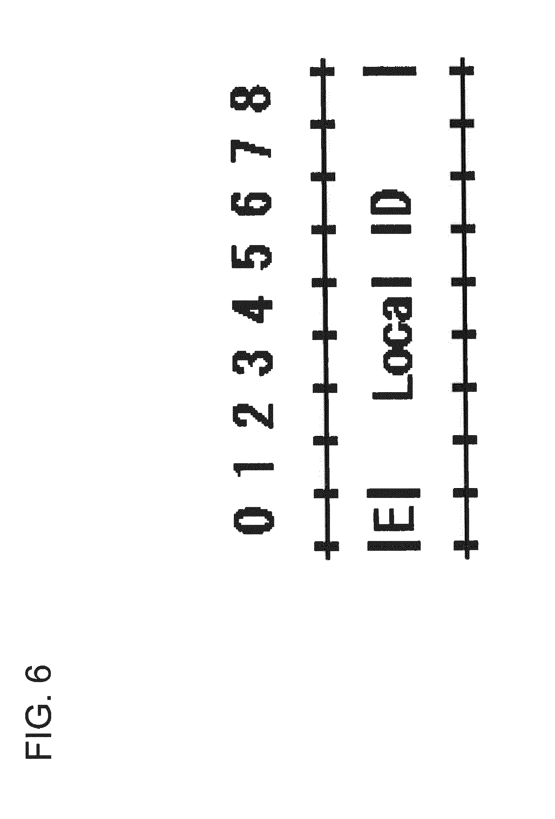

In this case, as shown in Fig. 6, the uppermost bit of 'Local ID #n' may use a local ID extension flag ('E' (Extension) bit) indicating whether the local ID has a one byte notation or a two byte notation. In this case, when the uppermost bit is 0, the forwarding node interprets the local ID as a one byte identifier, and when the uppermost bit is 1, the forwarding node interprets the local ID as a two byte identifier.

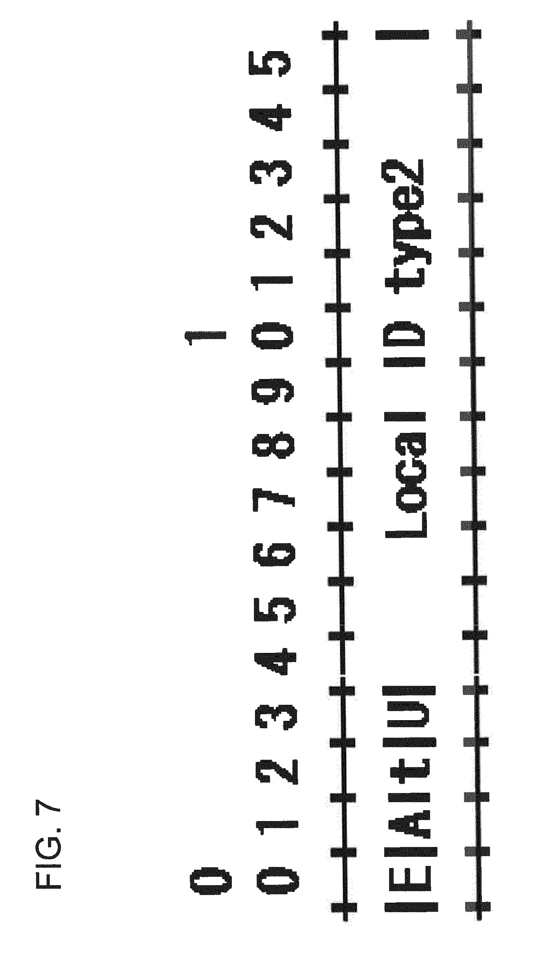

Fig. 6 is a diagram showing the local ID in a case where the local ID extension flag ('E') is '0'. Fig. 7 is a diagram showing the local ID in a case where the local ID extension flag ('E') is '1', and the path information length for one hop is two bytes. It is to be noted that a description has been given in which one byte or two bytes can be selected as the length of the local ID, but since it is important to represent a path for 1 hop by as short a bit length as possible, there is no necessity to strictly have one byte or two bytes, and it is possible to have a fixed length of less than one byte, or to have an arbitrary variable length delimited by an appropriate delimiter characteristic.

It is to be noted that that in 'Alt' (= Alternative Route) of Fig. 7, a value is set that indicates whether or not there is an alternative path where branching is possible from a forwarding node referring to the local ID, and indicates an alternative path information header to be referred to in a case of branching to the alternative path. Specifically, a case of 'Alt' being 0 indicates that there is no alternative path branching from the forwarding node referring to the local ID. On the other hand, a case of 'Alt' being 1 to 3 indicates that there is an alternative path branching from the forwarding node, and furthermore, the value indicates a forwarding information header number, which is to be referred to when branching to an alternative path.

'U' (= Used) in Fig. 7 indicates that forwarding processing on an alternative path shown by 'Alt' has been performed. In other words, this indicates that the alternative path has been used. When a packet is forwarded to the alternative path, the forwarding node sets the bit to '1'.

'Local ID type 2' of Fig. 7, similar to 'Local ID' of Fig. 6, is a field for setting a local ID, but since the bit length is larger than in Fig. 6, it is possible to describe more link identifiers or interface identifiers.

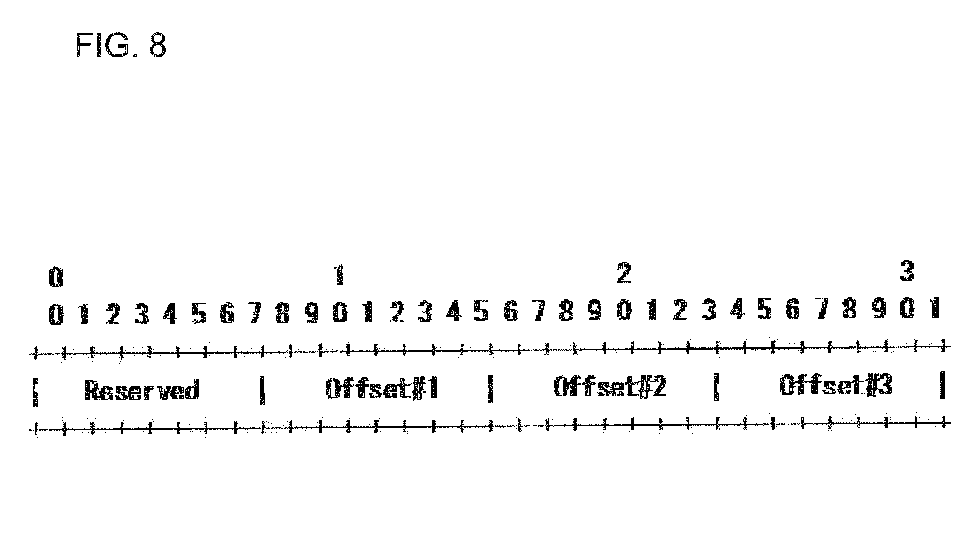

Next, a description is given concerning the alternative path start position information header of Fig. 4. Fig. 8 is one example of a format for an alternative path start position information header. In Fig. 8, 'Reserved' is a reserved field and is not used in the present exemplary embodiment. In 'Offsett #n' an offset from the head byte of a path information header to an n-th alternative path information header is set. Units are bytes. It is to be noted that the offset may also be an offset from the head byte from the alternative path start position information header.

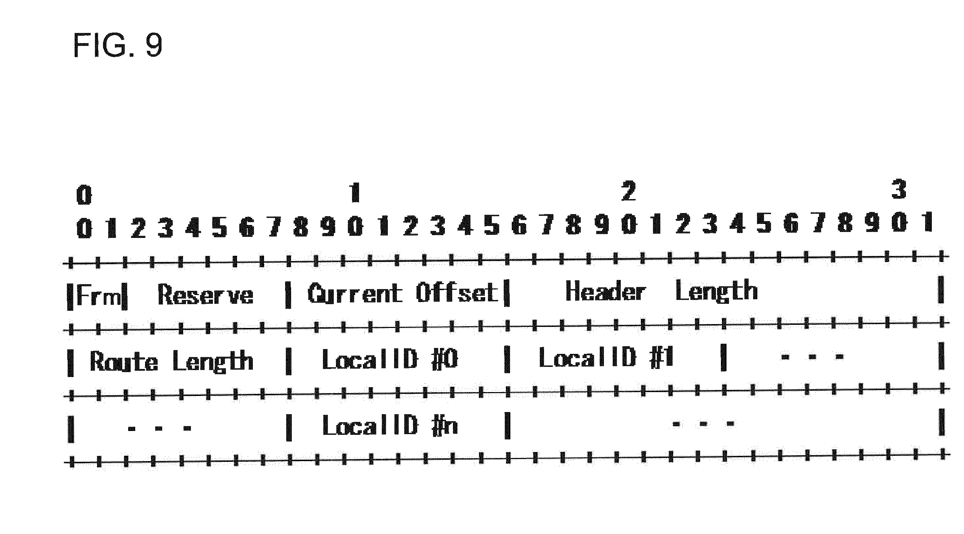

Next, a detailed description is given concerning the alternative path information header of Fig. 4. Fig. 9 is an example of a format of the alternative path information header. In Fig. 9, in 'Frm' (= From) the path information number before a transition to the alternative path is set. 'Reserve' is a reserved field and is not used in the present exemplary embodiment.

Formats of the path information header, the alternative path start position information header, and the alternative path information header, and the information that is set, as exemplified above, are only examples; modes are possible with other formats, information included in each header may be a portion of another header, or contained as a separate header.

The packet forwarding unit 320 refers to the 'Alt' field of the path information header of a received packet; when this is '0', forwarding processing using the path information header is performed, and otherwise, forwarding processing according to the alternative path information header is performed.

In a case where 'Alt' is '0', the packet forwarding unit 320 performs forwarding preprocessing making reference to the path information header as described previously. More specifically, in a case where the 'D' field of the path information header of a received packet is '0', that is, when forwarding in a normal direction is indicated, the packet forwarding unit 320 refers to the 'Current Offset', and after referring to a corresponding local ID and determining a communication interface 310 of a forwarding destination, the length amount (for example, one byte or two bytes) of a local ID referring to the value of the 'Current Offset' is increased, and a packet is transmitted from the determined communication interface 310. On the other hand, in a case where 'D' is '1', that is, when forwarding in a reverse direction is indicated, the packet forwarding unit 320 refers to the 'Current Offset', refers to a local ID that is one before the corresponding local ID, and determines the communication interface 310 of the forwarding destination. Thereafter, a reduction is made in the length amount of the local ID referring to the value of the 'Current Offset', and a packet is transmitted from the determined communication interface 310.

Meanwhile, in a case where 'Alt' is not '0', the packet forwarding unit 320 refers to the alternative path start position information header, the value set in the 'Alt' field is regarded as an alternative path number, and the corresponding 'Offset #n' field is read. For example, in a case where 'Alt' is '1', the value of 'Offset #1' is read. The value read here is the offset bytes from the head byte of the path information header to the alternative path information header that is to be referred to. Therefore, the packet forwarding unit 320 refers to the alternative path information header indicated by the number of offset bytes, and performs forwarding processing. Even in a case where the forwarding processing is performed by the alternative path information header, for the 'D' field, the 'Ex' field, and the 'F' field used in controlling the forwarding, the path information header is referred to.

When the path is transitioned to the alternative path indicated by the alternative path information header, the path number of the path that is the transition source is set in the 'Frm' field of the alternative path information header. Since it is possible to transition from the alternative path to a further alternative path, the path that is a transition source includes not only the path indicated by the path information header, but also a path indicated by the alternative path information header.

In a case where the 'Alt' field of the 'Local ID #n' of the path information header referred to for the present forwarding or an alternative path information header is not '0', that is, in a case where branching is possible from the forwarding node to an alternative node, the packet forwarding unit 320 is provided with a function of incrementing the 'Ex' field of the path information header, and recording, in the received packet, the fact that a branch point to an alternative path exists in the path.

Furthermore, in a case where the forwarding node is a branch point to the alternative path, and a forwarding failure occurs in the alternative path so that a returned packet is received, the packet forwarding unit 320 is provided with a function of returning the packet to the path before the transition to the alternative path, and then returning the packet in a reverse direction. Specifically, in a case of receiving a packet where the 'F' field and the 'D' field of the path information header are both '1', and the 'Alt' field is not '0', where the 'Current Offset' of the alternative path information header is 0, the packet forwarding unit 320 is provided with a function of copying information of the 'Frm' field of the alternative path information header to the 'Alt' field of the path information header.

The header operation unit 330 is provided with a function that, in a case of receiving a packet from the external network 700, acquires, from the path acquisition unit 360, path information for each one hop as far as the edge forwarding node 300 that is an exit from the edge forwarding node 300, and, as shown in Fig. 5, forms a path information header, and additionally an alternative path start position information header and an alternative path information header as necessary, to be assigned to the packet. For example, when the path information header is assigned, the header operation unit 330 sets '0' indicating forwarding in a normal direction in the 'D' field, and similarly sets '0' in each of the 'Alt', 'Ex', and 'F' fields. Furthermore, the header operation unit 330 sets '0' in 'Current Offset', and sets path information for each 1 hop, which has been acquired, in 'Local ID #n'. The header operation unit 330 sets appropriate values for other respective fields.

The header operation unit 330 is provided with a function of removing the path information header and, as necessary, the alternative path start position information header and the alternative path information header, in a case of forwarding a packet that has been assigned a path information header to the external network 700.

The local ID determination unit 340 is provided with a function that performs information exchange between the edge forwarding node 300 and a neighboring node, and determines a non-duplicated link ID. For example, in the following method, it is possible to avoid a duplicated setting of a link ID with a neighboring node.

First, a forwarding node proposes a link ID candidate by transmitting to a neighboring node a packet in which a link ID is set, which is not the link ID already assigned to itself. The neighboring node to which the link ID is proposed confirms whether or not the link ID is duplicated within its own node, and in a case where there is no duplicated link ID, transmits a response packet in which the proposed link ID and identifier information of its own node are set, to a forwarding node that is the proposal source. On the other hand, in a case where there is a duplicated link ID in the neighboring node, transmission is performed of a response packet in which its own node identifier is set and information indicating that there is duplication. This processing is repeated until there is no duplicated link ID.

The link ID determined in this way and the neighboring node information are recorded as a forwarding table in the recording unit 390.

An example of a method of determining the link ID was shown above, but the link ID may also be determined by another method. For example, with the path management server 500 or the like, other nodes may be determined, and notification given to respective forwarding nodes.

It is to be noted that in a case of using an identifier of a communication interface as a local ID, it is possible to omit negotiation with the abovementioned neighboring nodes. Instead, in a case of long information requiring several bytes in the interface identifier as described above, processing is performed for associating an identifier with a range that can be contained in one byte or two bytes, with an interface identifier. However, information that a neighboring node cannot know, as in an interface identifier, is used as the local ID, and furthermore, in a case where this information is not mutually exchanged, since forwarding in the reverse direction as described above cannot be performed, information shared with a neighboring node, as in a link identifier, is preferably used.

The neighbor information notification unit 350 is provided with a function of transmitting neighbor information containing the link ID determined as the local ID by the local ID determination unit 340, the identifier of a neighboring node connected to the link, and a self-identifier, to the path management server 500. In a case where the communication nodes 100a and 100b of the external network 700 are connected to the link, information by which a determination of a node of the external network can be made is added to the information. Furthermore, for path calculation by the path management server 500, the neighbor information may include information such as a band of each link, reliability, and congestion state, and neighboring node failure information and the like. A trigger for transmitting the neighbor information to the path management server 500 may be at timing at which the processing for determination of the local ID is completed, or transmission may be performed at a prescribed time interval. Furthermore, in a case of a transmission including the link information and the neighboring node failure information, the transmission may be triggered by a change occurring in this information.

The path acquisition unit 360 is provided with a function that, when a packet is received from the communication nodes 100a and 100b of the external network 700, transmits a path request signal containing an identifier of the edge forwarding node 300 and information of the received packet to the path management server 500, and acquires the forwarding path of the packet. The information of the received packet is information that may affect the forwarding path determination, and in the simplest case is only a destination address. However, in a case of implementing more precise path control, in addition to the destination address, it is possible to include some or all of information such as: source address, protocol information that is contained after the header of the packet, a destination port number when using TCP (Transmission Control Protocol) or UDP (User Datagram Protocol), and a source port number. In addition, other information may be included.

As a result of transmitting the path request signal, a path response signal is returned from the path management server 500. Information listing local IDs for each one hop is contained in the forwarding path information included in the path response signal, in accordance with the forwarding path with the edge forwarding node 300 as starting point. In a case where an alternative path exists, information concerning the alternative path information is also contained.

It is to be noted that information that may affect the forwarding path, such as the destination address and the like, and information corresponding to a group of local IDs indicating a forwarding path can be set beforehand in the edge forwarding node 300, and can be received from the path management server in advance. In this case, the path acquisition unit 360 acquires the forwarding path information from information set internally, not the path management server 500.

Furthermore, in the abovementioned example, the edge forwarding node 300 has as a starting point a local ID that can identify a communication interface that is a first forwarding destination, but the starting point may be a local ID that can identify a communication interface 310 that has received the packet.

The alternative path transition unit 370 is provided with a function of deciding whether or not the received packet should be forwarded in an alternative path. More specifically, in a case where the received packet is a packet that has been sent back as a result of a forwarding failure, and furthermore that there exists an unused alternative path for which branching from the forwarding node is possible, the alternative path transition unit 370 decides that forwarding on the alternative path should be performed. That is, the 'D' field and the 'F' field of the path information header used in the present forwarding processing are both '1', and in the local ID presently referred to in the alternative path information header, additionally a decision is made that forwarding should be performed in the alternative path in a case where outside of the 'E' field being '1' and the 'Alt' field being '0', the 'U' field is '0'.

Further, in a case of a decision to transition to an alternative path, the alternative path transition unit 370 performs processing to transition to forwarding using the alternative path information. Specifically, the alternative path transition unit 370 sets the 'U' field to '1' in the local ID, and copies the value of the 'Alt' field in the same local ID to the 'Alt' field in the path information header. Furthermore, the alternative path transition unit 370 sets both the 'D' field and the 'F' field of the path information header to '0', and decrements the 'Example' field.

After the received packet is forwarded from an appropriate communication interface 310 by the packet path processing unit 320, in a case where there is a failure for some reason, such as a link down or the like, the forwarding result recording unit 380 records information indicating that forwarding by the present forwarding path has failed in the received packet, and in addition performs processing for sending back the packet along the path the received packet has been forwarded on. Specifically, the forwarding result recording unit 380 sets to '1' the 'F' field of the path information header referred to in the present forwarding processing, or the alternative path information header, and also sets the 'D' field to '1', and in addition outputs to a packet forwarding means 320. As a result, forwarding processing in a reverse direction is performed.

The recording unit 370 holds a forwarding table shown in Fig. 3, and this is referred to by the packet forwarding unit 320, the local ID determination unit 340, and the neighbor information notification unit 350.

The internal forwarding node 400 is disposed inside the data forwarding network 600, and is provided with a function such that, in a case of receiving a packet transmitted from a neighboring node, the packet is transmitted to a neighboring node inside the data forwarding network 600 based on information of the path information header or the alternative path information header in the packet.

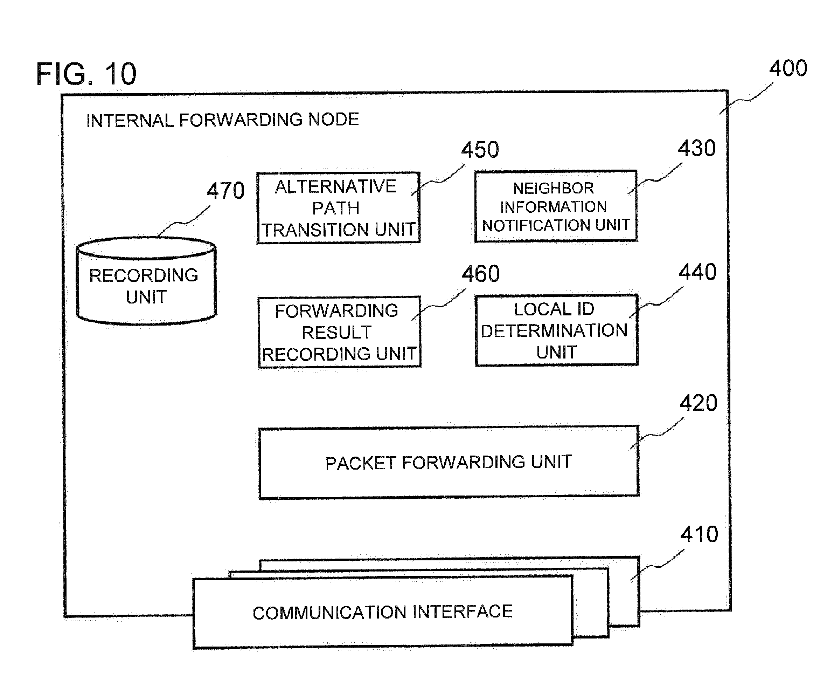

Fig. 10 is a diagram showing a configuration of the internal forwarding node 400 of Fig. 1. The internal forwarding node 400, as shown in Fig. 10, comprises communication interfaces 410, a packet forwarding unit 420, a neighbor information notification unit 430, a local ID determination unit 440, an alternative path transition unit 450, a forwarding result recording unit 460, and a recording unit 470.

The communication interfaces 410, the packet forwarding unit 420, the local ID determination unit 440, the neighbor information notification unit 430, the alternative path transition unit 450, the forwarding result recording unit 460, and the recording unit 470 of the internal forwarding node 400 are respectively equivalent to the communication interfaces 310, the packet forwarding unit 320, the local ID determination unit 340, the neighbor information notification unit 350, the alternative path transition unit 370, the forwarding result recording unit 390, and the recording unit 390, of the edge forwarding node 300, and detailed descriptions thereof are omitted here.

That is, the internal forwarding node 400 can be regarded as having the header operation unit 330 and the path acquisition unit 360 taken away from the edge forwarding node 300. Conversely, the edge forwarding node 300 can be said to be a forwarding node obtained by adding the header operation unit 330 and the path acquisition unit 360 to the internal forwarding node 400.

The path management server 500 collects neighbor information notified from edge forwarding nodes 300 and internal forwarding nodes 400, and configures network topology information describing connection relationships of the internal forwarding nodes 400 and the edge forwarding nodes 300 in the data forwarding network 600. The network topology information also includes connection information for the communication nodes 100a and 100b connected to the edge forwarding nodes 300. In a case where information (congestion state, failure state, and the like) indicating the state of forwarding nodes and links between respective forwarding nodes is included in the notified path information, this is also associated with the connection information and managed. A function is provided that, in a case where forwarding path information is requested from an edge forwarding node 300, performs a calculation obtaining an appropriate forwarding path using information included in the path request and the network topology information that has been configured internally, and with the edge forwarding node 300 that performed the path request as a starting point, responds with a forwarding path as far as the edge forwarding node 300 that is an exit to the external network 700, as information that lists, in order, local IDs (link IDs) for each one hop. Here, a case is considered in which forwarding has failed due to a forwarding node failure or a link disconnection or the like, and the path management server 500 may calculate one or a plurality of alternative paths, and include information of the calculated alternative paths in the response information.

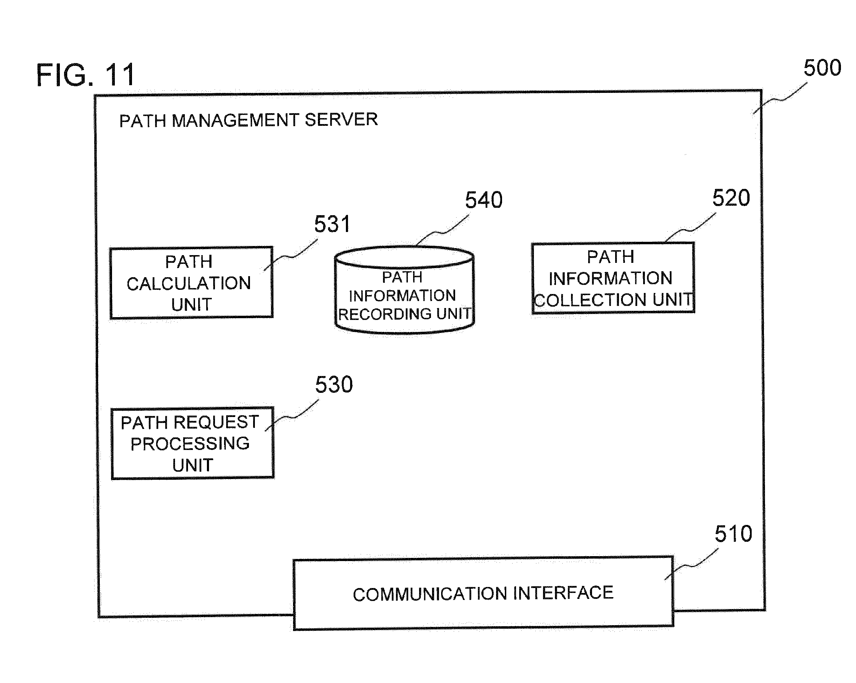

Fig. 11 is a diagram showing a configuration of the path management server 500 of Fig. 1. The path management server 500, as shown in Fig. 11, comprises a communication interface 510, a path information collection unit 520, a path request processing unit 530, a path calculation unit 531, and a path information recording unit 540.

The communication interface 510 is an interface that performs transmission and reception of packets. As described above, implementation is possible by an NIC such as a LAN card, for example, and by software (a driver) for operation thereof.

When the path information collection unit 520 receives neighbor information transmitted from the edge forwarding node 300 and the internal forwarding node 400, it uses an identifier of the node that transmitted the neighbor information, contained in the neighbor information, a local ID (link ID), and a neighboring node identifier, to configure network topology information within the data forwarding network 600, in the path information recording unit 540. In a case where accompanying information such as link band, reliability, congestion state, and neighboring node failure information, is included in the neighbor information, the accompanying information is associated with and recorded in the network topology information. These items of information can be used, for example, as a link cost when calculating a path, to be described later.

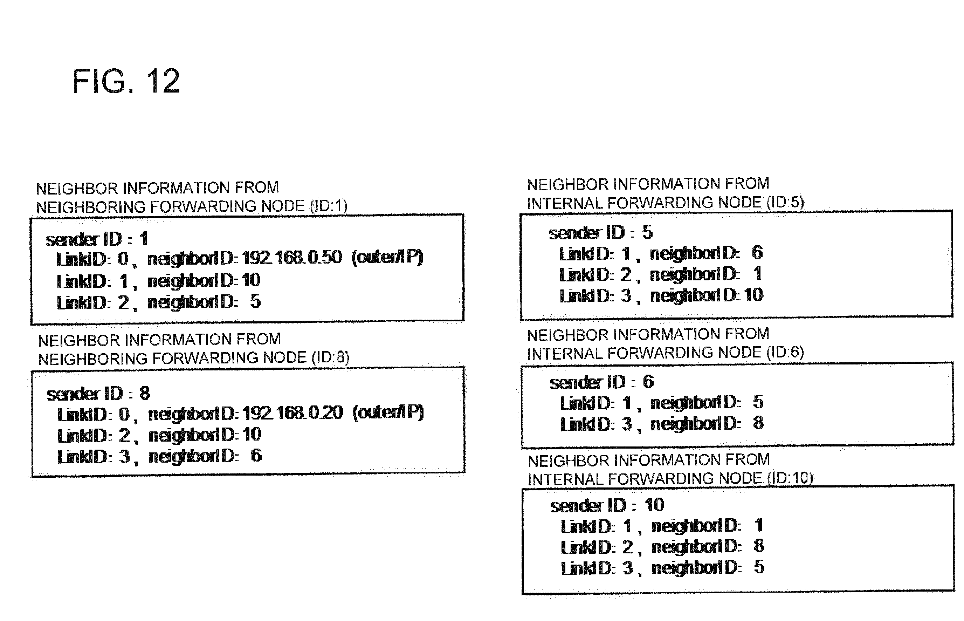

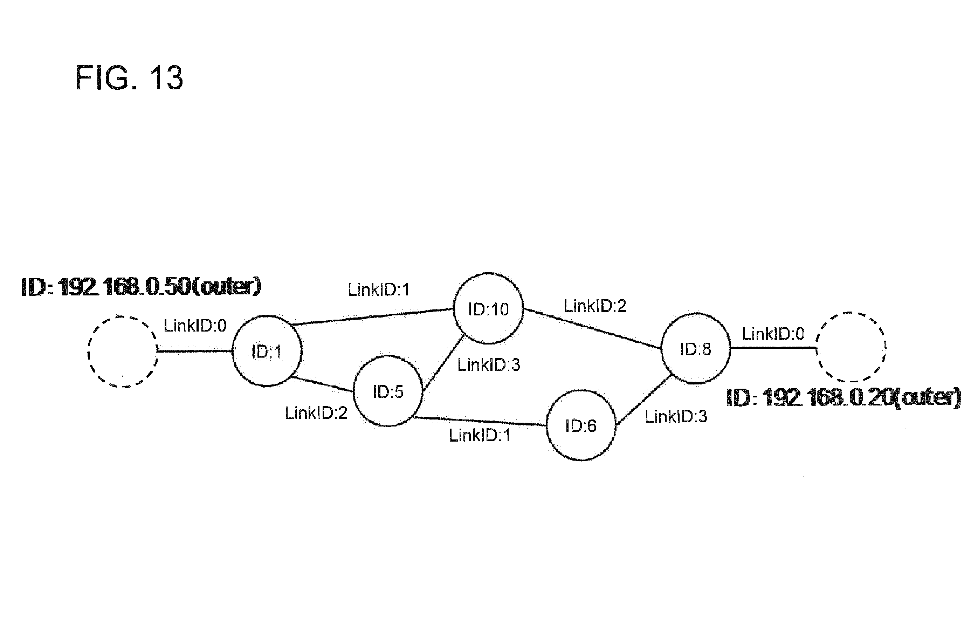

Fig. 12 is an example of neighbor information received from respective forwarding nodes. Fig. 13 is an example of a network topology configured from the neighbor information of Fig. 12. In the example of Fig. 13, for simplicity, the accompanying information is omitted. Furthermore, the external network is assumed to be an IP network.

In Fig. 12, 'sender ID' indicates an identifier of a forwarding node that transmits neighbor information. In Fig. 12, 'Link ID' indicates a link ID assigned to a link to which the forwarding node is connected. In Fig. 12, 'neighbor ID' indicates an identifier of a neighboring node connected to the link. Since the external network is assumed to be an IP network, an IP address is used as an identifier of a communication node 100. Furthermore, since negotiation is carried out among neighboring nodes as described above, a link ID is not set to be duplicated in one forwarding node, but it is permitted for non-neighboring forwarding nodes to use the same link ID. For example, a link with Link ID = 1 is used between a node of ID = 1 and a node of ID = 10, and between a node of ID = 5 and a node of ID = 6, and in each forwarding node it is possible to identify a link uniquely. That is, it is sufficient if the length of the link ID has a length that is enough to ensure uniqueness within one forwarding node.

In a case where neighbor information of Fig. 12 is obtained, for example, the path information collection unit 520 configures the network topology as shown in Fig. 13, and records the topology in the path information recording unit 540.

The link ID is used in the neighbor information of Fig. 12 and in the network topology information of Fig. 13 that is configured based on the neighbor information, but when other information such as an interface identifier is used as a local ID, it is possible to configure the network topology information in the same way.

The path request processing unit 530 receives a path request signal transmitted from the edge forwarding node 300, and together with information included therein, the path calculation request is notified to the path calculation unit 531.

When the path request processing unit 530 acquires one or a plurality of the forwarding path information items (information in which the link ID for each one hop is listed in order of the forwarding path) from the path calculation unit 531, the path response signal containing the forwarding path information is transmitted to the edge forwarding node 300 that is a source of the path request signal.

When notified of the path calculation request from the path request processing unit 530, with the identifier of the edge forwarding node 300 that is the path request source, and the destination address, both of which are inputted, as respective start and end points, the path calculation unit 531 uses the network topology information as in Fig. 13 that is recorded in the path information recording unit 540, to perform calculation of the path. In the path calculation, an algorithm for obtaining the shortest path, known as the Dijkstra method, can be applied. However, it is also possible to apply other algorithms. At this time, besides the optimal path, several alternative paths may be obtained.

In a case where the source address of the IP packet is included in the path calculation request, the source address (that is, the identifier of the communication node 100a or 100b that is the source of the packet received by the edge forwarding node 300) may also be used as a starting point. Furthermore, in performing the path calculation as described above, the path calculation may be performed using other information such as a TCP or UDP destination/source port number or the like. In addition, information (band, congestion state, and the like) accompanying the link, or information such as an identifier of a failing edge or internal forwarding node may also be used.

The network topology information as shown in Fig. 13, from the path information collection unit 520, is recorded in the path information recording unit 540. The network topology information is referred to, from the path calculation unit 531 in order to calculate the path.

The communication interfaces 310, 410, and 510, described in the exemplary embodiment of the present invention above, can be implemented, as mentioned above, by an NIC such as a LAN card for example, or by software (a driver) that drives the NIC.

Furthermore, the recording unit 390, the recording unit 470, and the path information recording unit 540 can be realized by a device that can record information, such as a semiconductor memory, a hard disk drive or the like.

Other function blocks can be realized by a computer program (software) executed in one or a plurality of CPUs installed in respective devices, or by hardware. Some of the processing to be performed by the functional blocks may be done by a computer program (software), and the remainder may be configured by hardware.

Next, a detailed description is given concerning an operation of the present exemplary embodiment, making reference to the drawings. First, an operation of the edge forwarding node 300 is described.

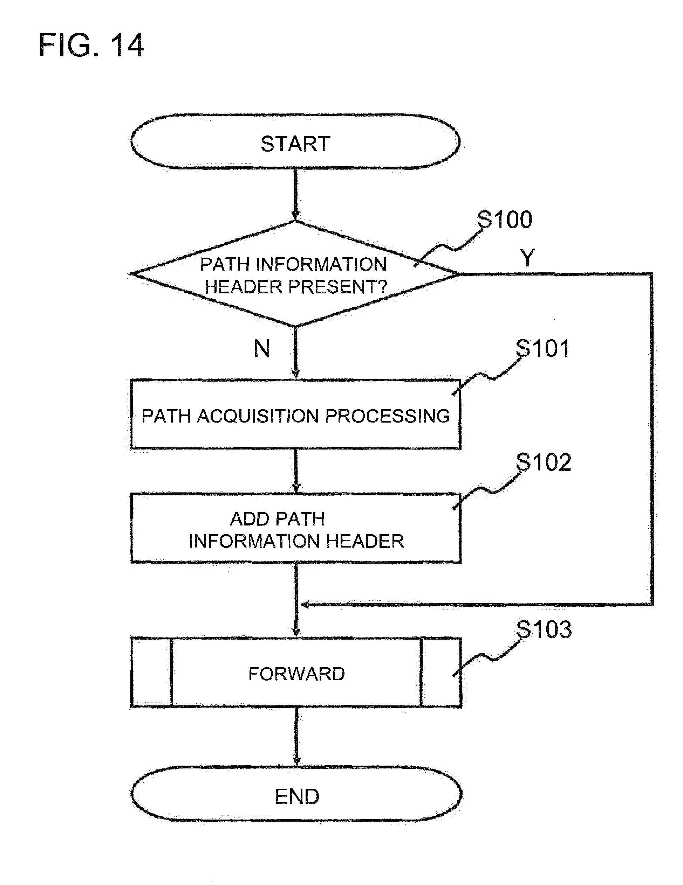

Fig. 14 shows flow of processing in a case where the edge forwarding node 300 receives a packet from the data forwarding network 600 or the external network 700.

First, on receiving a packet via the communication interface 310, the packet forwarding unit 320 checks whether or not a path information header is added to the packet (step S100).

In a case where the path information header is added, control proceeds to 'Y', and forwarding processing is performed in accordance with the path information header (to step S103). On the other hand, in a case where the path information header is not added, control proceeds to 'N', and path acquisition processing that acquires the forwarding path information by transmitting a path request signal to the path management server 500, from the path acquisition unit 360, is performed (step S101).

When the acquisition of the forwarding path information is complete, the header operation unit 330 sets the local ID in the local ID field ('Local ID #n') of the path information header of Fig. 5, in accordance with the order of the forwarding path of the acquired forwarding path information. Furthermore, the header operation unit 330 sets the 'D', 'Alt' and 'Ex' fields to '0' and the 'Current Offset' to '0'. The header operation unit 330 also sets other fields to appropriate values.

Furthermore, in a case where information of alternative paths is included in the path information acquired in the abovementioned step S101, the header operation unit 330 adds alternative path information headers in accordance with the number of alternative paths. In this case the header operation unit 330 sets 'Frm' and 'Current Offset' of the alternative path information header shown in Fig. 9 to '0', and sets the acquired alternative path in the local ID field ('Local ID #n'). Furthermore, the header operation unit 330 respectively sets other fields also to appropriate values, and sets the number of offset bytes from the head byte of the path information header to the n-th alternative path information header, as described above, in the 'Offset #n' field of the alternative path start position information header.

The header operation unit 330 adds the abovementioned path information header, the alternative path start position information header, and the alternative path information header to the head of the received packet, in the order shown in Fig. 4 (step S102).

The packet forwarding unit 320 executes forwarding processing in accordance with any of the path information header and the alternative path information header described (step S103).

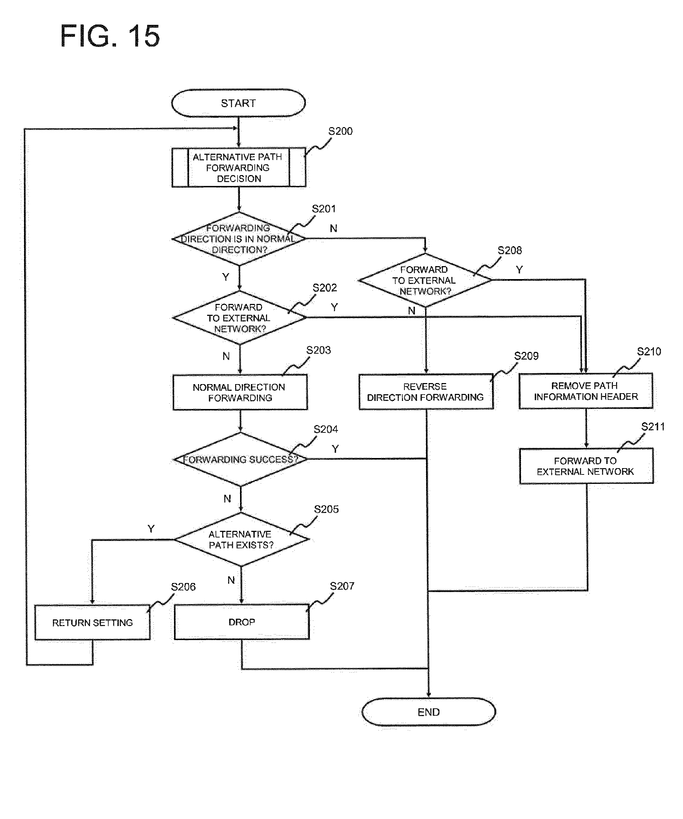

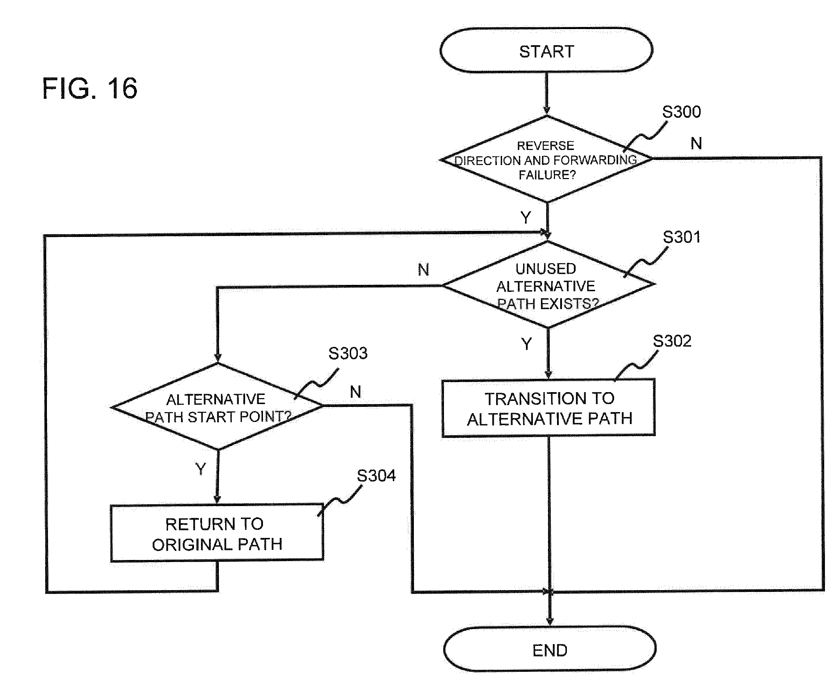

Fig. 15 is a flowchart representing details of forwarding processing of step S103 of Fig. 14. Referring to Fig. 15, first the alternative path transition unit 370 decides whether to perform forwarding processing using the alternative path or to perform forwarding processing using normal path information. Details of the decision processing here are described later using Fig. 16.

The packet forwarding unit 320 checks the 'D' field of the path information header and decides whether to forward in a normal direction or to forward in a reverse direction (step S201).

In a case where the value of the 'D' field indicates forwarding in a normal direction ('0') ('Y' in step S201), a decision is made as to whether or not the forwarding destination of the packet is the external network 700 (step S202). In forwarding in the normal direction, the decision as to whether to forward to the external network 700 can be decided by comparing 'Current Offset' and 'Route Length'. As another decision method, a value may be used that enables distinguishing whether or not the local ID is for forwarding to the external network 700, and information indicating an end may be contained after the final local ID in the path information header. Other methods may also be used.

In a case of a decision not to forward to the external network 700, control proceeds to 'N', reference is made to the path information header or the alternative path information header, in accordance with the 'Alt' field of the path information header, and the number of bytes of 1 hop are added to the 'Current Offset' of the header being referred to (details are described later). The number of bytes of one hop is the number of bytes of the 'Local ID #n' presently being referred to. Here, the local ID that is referred to before adding to the value of the 'Current Offset' is stored. Furthermore, in a case where the 'Alt' field in the local ID ('Local ID #n) is not '0', that is, in a case where, for the received packet, the forwarding node is a branch point to the alternative path, the 'Ex' field of the path information header is incremented.

The packet forwarding unit 320 uses the local ID that is stored, to perform forwarding processing of the packet in a normal direction (step S203). Specifically, a communication interface 310 that is to be a forwarding destination is determined from the local ID using the information of the forwarding table recorded in the recording unit 370, and the packet is forwarded from the communication interface 310.

Here, a description is given concerning a method in which the path information to be referred to by the packet forwarding unit 320 decides on the path information header or the alternative path information header (where a plurality thereof exist, any of them). First, the packet forwarding unit 320 refers to the 'Alt' field of the path information header; if the 'Alt' field is '0', reference is made to the path information header, and for values outside of '0', with a value thereof as an alternative path number n, reference is made to the n-th alternative path information header. The number of offset bytes as far as the n-th alternative path information header is obtained by referring to the 'Offset #n' field in the alternative path start position information header.

As a result of the packet forwarding in the normal direction, in a case where the packet forwarding is successful ('Y' in step S204), processing regarding the packet is ended. On the other hand, in a case where there is a failure in the packet forwarding ('N' in step S204), confirmation as to the existence of an alternative path is performed (step S205). It is to be noted that with regard to a packet forwarding failure, a wide variety of cases can be considered, such as a failure of a communication interface, detecting that a link is not functioning, an overflow of a transmission buffer, or the like, and any of these is assumed to have been detected.

Confirmation of the existence of an alternative path is performed using the 'Ex' field of the path information header. In a case where the 'Ex' field is not '0', the packet forwarding unit 320 decides that there is an alternative path ('Y' in step S205), and return setting is performed to appropriately set each field of the path information header, so that the received packet is transmitted back to a forwarding node that is a branch point to the alternative path (a case is also possible where the forwarding node itself is a branch point) (step S206). Specifically, the 'D' field and the 'F' field of the path information header are both set to '1', and the alternative path forwarding decision of step S200 is performed.

On the other hand, in a case where the 'Ex' field is '0', a decision is made that an alternative path does not exist ('N' in step S205), the packet forwarding unit 320 drops the packet (step S207), and processing related to the packet is ended. If the 'Ex' field is '0', the alternative path information header is regarded as not being assigned, and instead of the abovementioned method, a confirmation may be made that an alternative path exists by following the path information header.

On the other hand, in a case where the value ('1') of the 'D' field indicates forwarding in a reverse direction ('N' in step S201), a decision is made as to whether or not the forwarding destination of the packet is the external network 700 (step S208).

In forwarding in the reverse direction, the decision as to whether or not to forward to the external network 700 can be decided according to whether or not the 'Alt' field of the path information header is '0', and the value of the 'Current Offset' is '0' (when '0', a decision is made to forward to the external network). This is a decision method for a case where a link identifier for a link between the communication node 100a (100b) that first transmit the packet and the edge forwarding node 300 that receives the packet is not used as the first local ID. In a case where the link identifier is used as the first local ID, when the present 'Current Offset' has a value with 1 hop amount subtracted of '0', a decision can be made to forward to the external network. As another decision method when forwarding in a reverse direction, a value may be used that can distinguish whether or not the local ID is to be forwarded to the external network 700, and information indicating a start may be contained before the first local ID in the path information header. Other methods may also be used.

In a case of a decision not to forward to the external network 700 ('N' in step S208), the packet forwarding unit 320 refers to the path information header or the alternative path information header, in accordance with the 'Alt' field of the alternative path header, and the number of bytes of 1 hop is subtracted from the 'Current Offset' of the header referred to (details are described later). Here, a local ID, which is referred to by the value of the 'Current Offset' after the subtraction, is stored.

Thereafter the packet forwarding unit 320 performs forwarding processing of the packet based on the local ID that is stored (step S209). Specifically, the communication interface 310 that is to be the forwarding destination is determined from the local ID using the forwarding table recorded in the recording unit 390, the packet is forwarded from the communication interface 310, and the processing is completed.

Here, a method of deciding on the path information header or any of the alternative path information headers (including a case where a plurality of alternative path information items exist) is similar to forwarding in a normal direction in step S203.

On the other hand, in steps S202 and S208, in a case of a decision to forward to the external network 700 ('Y' in step S208), the path information header, the alternative path start position information header, and the alternative path information header are removed from the header of the received packet (step S210). The packet from which the headers are removed is forwarded to the node 100a (100b) of the external network 700.

Next, details of alternative path forwarding decision processing of step S200 of Fig. 15 are described, making reference to a flowchart of Fig. 16.

First the alternative path transition unit 370 decides whether or not a received packet is a packet for which a forwarding failure has occurred in the forwarding node or in some forwarding node going via the forwarding node, and has been sent back in a reverse direction via a forwarding node it has gone through. Specifically, reference is made to the 'D' field and the 'F' field in the path information header of the received packet, and a decision is made as to whether or not values of both of these are '1'. Here, in a case where the packet is not a reverse direction packet nor a forwarding failure packet, the alternative path transition unit 370 decides not to transition the forwarding path to an alternative path, and processing is completed ('N' in step S300).

On the other hand, in a case where, as a result of the decision of step S300, there is forwarding in a reverse direction due to failure ('D', and 'F' are both '1') ('Y' in step S300), the alternative path transition unit 370 checks the local ID that is to be referred to by the forwarding node, in accordance with the 'Current Offset' field, and decides whether or not the forwarding node is a branch point where a transition to an alternative path is possible, and whether or not the alternative path is unused (step S301). Specifically, a confirmation is made as to whether the 'Alt' field is not '0' and the 'U' field is '0', in the local ID ('Local ID #n').

As a result of the decision of step S301, in a case where a decision is made that the forwarding node itself is a branch point to an unused alternative path, appropriate values are set in each field of the path information header and the alternative information header in order to forward the packet to the alternative path (step S302). Content of the setting is listed below:
- Set the 'D' field of the alternative information header to '0' (return in reverse direction forwarding).
- Set the 'F' field of the path information header to '0' (clear the forwarding failure information).
- Decrement the 'Ex' field of the path information header.
- Set the path information number, which is a source of the transition to the alternative path in the 'Frm' field of the alternative path information header. That is, the value of the 'Alt' field of the path information header is copied to the 'Frm' field of the alternative path information header.
- Set the 'U' field of the local ID ('Local ID #n') to '1'.
- Copy the value of the 'Alt' field in the ID ('Local ID #n') to the 'Alt' field of the path information header.

By the above setting, processing for deciding whether or not to transition to the alternative path and forward, and for transitioning to the alternative path is completed.

On the other hand, in a case of a decision that there is no unused alternative path in step S301, that is, a case where the forwarding node itself is not a branch point to an alternative path or that it is a branch point but the alternative path from the branch point is a path on which the packet has already been forwarded ('N' in step S301), the alternative path transition unit 370 decides whether or not the header presently being referred to is an alternative path information header, and whether or not the first path information (local ID) therein is being referred to (whether or not this is a start point of the alternative path) (step S303). Here, a decision can be made as to whether or not the alternative path information header is being referred to by referring to the 'Alt' field of the path information header. Furthermore, a decision as to whether or not it is the first path information can be made by deciding whether or not the 'Current Offset' is '0'.

As a result of the decision of step S303, in a case where it is decided that the forwarding node itself is the start point of the alternative path ('Y' in step S303), the alternative path transition unit 370 executes return processing to the original path (step S304). The return processing to the original path is performed by copying the value of the 'Frm' field in the alternative path information header that is presently being referred to, to the 'Alt' field of the path information header. Thereafter, control returns to step S301 and a decision is made as to whether or not this is an unused alternative path.

In other cases ('N' in step S303), processing is completed without return processing to the original path being performed.

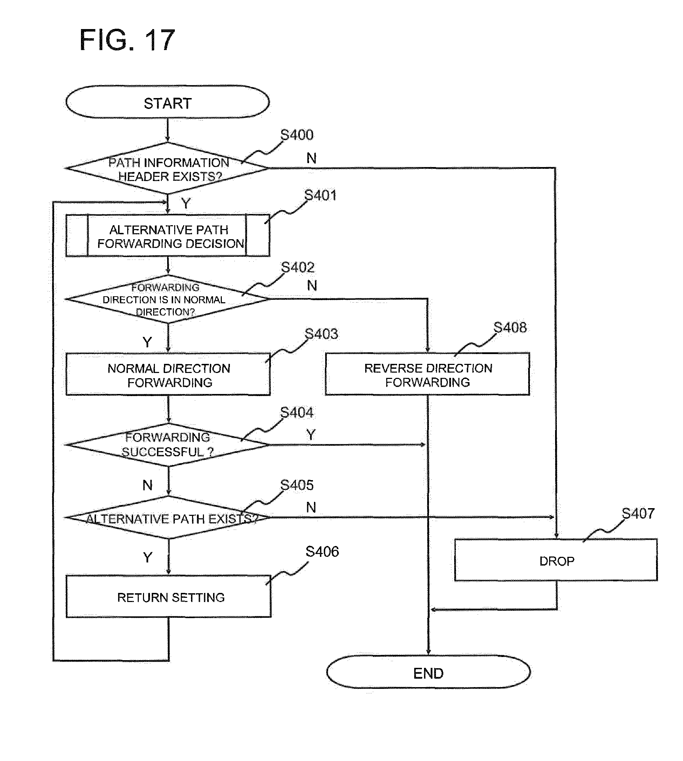

Next, an operation of the internal forwarding node 400 is described. Fig. 17 shows processing in a case where the internal forwarding node 400 receives a packet from the edge forwarding node 300 of the data forwarding network 600 or an internal forwarding node 400.

Referring to Fig. 17, first, on receiving a packet via a communication interface 410, the packet forwarding unit 420 checks whether or not a path information header is assigned to the packet in (step S400).

In a case where the path information header is assigned, control proceeds to 'Y', and an alternative path forwarding decision is made. Here, processing that is the same as the alternative path forwarding decision processing in the edge forwarding node 300 shown in Fig. 16 is performed (step S401). On the other hand, in a case where the path information header is not assigned, control proceeds to 'N', and processing is performed to drop the received packet (step S407).

Next, the packet forwarding unit 420 checks the 'D' field of the path information header and decides whether to forward in a normal direction or to forward in a reverse direction (step S402).

Here, in a case where the value of the 'D' field indicates forwarding in a normal direction ('0'), control proceeds to 'Y', reference is made to the path information header or the alternative path information header in accordance with the value of the 'Alt' field of the path information header, and the number of bytes of one hop is added to the 'Current Offset' of the header referred to. The number of bytes of one hop is the number of bytes of the local ID ('Local ID #n') presently being referred to. Here, the local ID that is referred to before adding to the value of the 'Current Offset', is stored. Furthermore, in a case where the 'Alt' field in the local ID field is not '0', that is, a case where for the received packet the forwarding node is a branch point to an alternative path, the 'Ex' field of the path information header is incremented.

Thereafter, forwarding processing of the packet in a normal direction is performed based on the local ID that is stored (step S403). Specifically, the communication interface 410 that is to be the forwarding destination is decided from the local ID using the forwarding table recorded in the recording unit 470, and the packet is forwarded from the communication interface 410.

Here, it is possible to decide which among the path information header or the alternative path information header (where a plurality thereof exist, any of them) is referred to by using the 'Alt' field of the path information header. If the 'Alt' field is '0', reference is made to the path information header, and if not '0', with the value as an alternative path number n, reference is made to the n-th alternative path information header. The number of offset bytes as far as the n-th alternative path information header is obtained by referring to the 'Offset #n' field in the alternative path start position information header.

As a result of the packet forwarding in the normal direction, in a case where the packet forwarding is successful ('Y' in step S404), processing regarding the packet is ended. On the other hand, in a case where there is a failure in the packet forwarding ('N' in step S404), confirmation as to the existence of an alternative path is performed (step S405).

Confirmation of the existence of an alternative path (whether or not there is a branch point to an alternative path in the path that the received packet has taken as far as the forwarding node) is performed using the 'Ex' field of the path information header. In a case where the 'Ex' field is not '0', the packet forwarding unit 420 decides that there is an alternative path ('Y' in step S405), and return setting is performed to appropriately set each field of the path information header, so that the received packet is transmitted back to a forwarding node that is a branch point to the alternative path (a case is also possible where the forwarding node itself is a branch point) (step S406). Specifically, the 'D' field and the 'F' field of the path information header are both set to '1', and thereafter the alternative path forwarding decision of step S401 is performed.

On the other hand, in a case where the 'Ex' field is '0', a decision is made that an alternative path does not exist ('N' in step S405), the packet forwarding unit 420 drops the packet (step S407), and processing related to the packet is ended. If the 'Ex' field is '0', an alternative path information header is regarded as not being assigned, and instead of the abovementioned method, a confirmation may be made that an alternative path exists by following the path information header.

On the other hand, in step S402, in a case where the value of the 'D' field ('1') indicates forwarding in a reverse direction ('N' in step S402), the packet forwarding unit 420 refers to the path information header or the alternative path information header, in accordance with the value of the 'Alt' field of the path information header, and subtracts one hop amount from the value of the 'Current Offset' of the header referred to. Here, the packet forwarding unit 420 holds a local ID that is referred to by the 'Current Offset' after the subtraction.

Thereafter the packet forwarding unit 420 performs forwarding processing of the packet in a reverse direction, based on the local ID that is stored (step S408). Specifically, the communication interface 410 that is to be the forwarding destination is decided from the local ID using the forwarding table recorded in the recording unit 470, the packet is forwarded from the communication interface 410, and the processing is completed.

Here, a decision concerning the path information to be referred to, being in the path information header or in the alternative path information header (where a plurality thereof exist, any of them) is similar to forwarding in a normal direction in step S403.

Next, a description is given concerning processing for notification of a determination of the local ID by the edge forwarding node 300 and the internal forwarding node 400 and a result thereof, as neighbor information to the path management server 500.

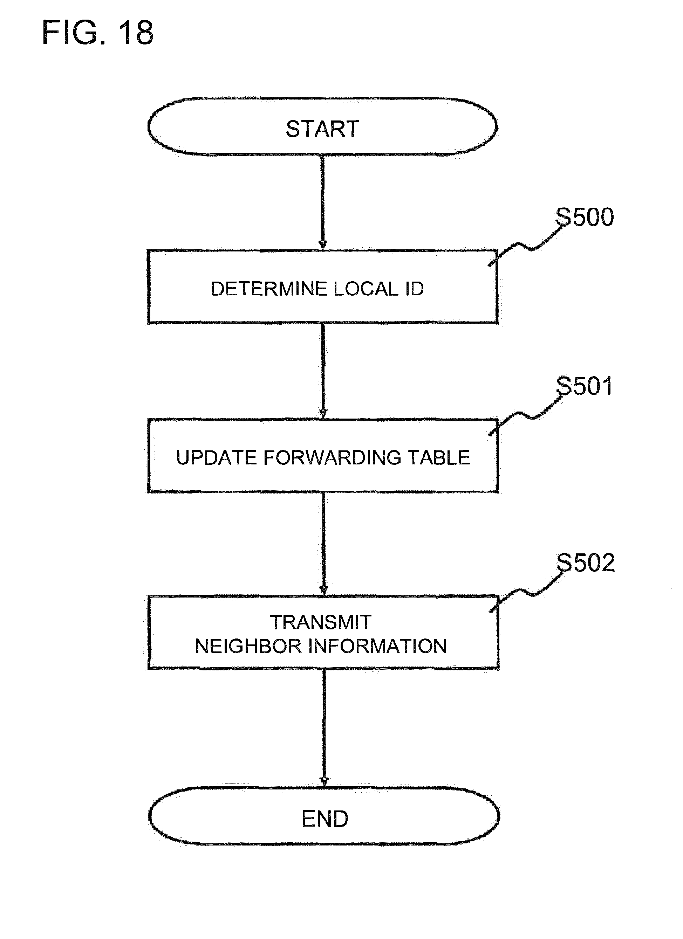

Fig. 18 is a flowchart showing operations in which the edge forwarding node 300 and the internal forwarding node 400 transmit neighbor information notification.

Referring to Fig. 18, first, the local ID determination unit 340 (430) determines the local ID (step S500). In a case of using a link ID as the local ID, the link ID is determined by implementing negotiation between a neighbor node and the link ID. It is to be noted that in a case of using an identifier of the communication interface as the local ID, an identifier assigned to the communication interface 310 (410), which is provided in the edge forwarding node 300 or the internal forwarding node 400, is the local ID.

Here, the link ID is determined with regard to all physical or logical links that can be used by the edge forwarding node 300 or the internal forwarding node 400. In the same way, the identifier of the communication interface is determined with regard to all physical or logical communication interfaces. However, for management or other reasons, some links and communication interfaces may be excluded.

Next, the local ID determination unit 340 (440) associates the determined local ID and the communication interface information (information necessary for having the communication interface as the packet forwarding destination), to be recorded in the forwarding table (refer to Fig. 3) in the recording unit 390 (470) (step S501). Identifiers of neighboring nodes connected ahead of each link are associated and recorded in the forwarding table. Furthermore, information related to each link, and failure information of neighboring links and the like may be recorded as accompanying information.

When recording to the forwarding table is complete, the neighbor information notification unit 350 (430) configures the local ID and neighbor information setting neighboring node identifiers (refer to Fig. 12), from information of the forwarding table recorded in the recording unit 390 (470), and transmits this to the path management server 500 (step S502). Furthermore, information related to each link, and failure information of neighboring nodes and the like may be contained as accompanying information in the neighbor information.

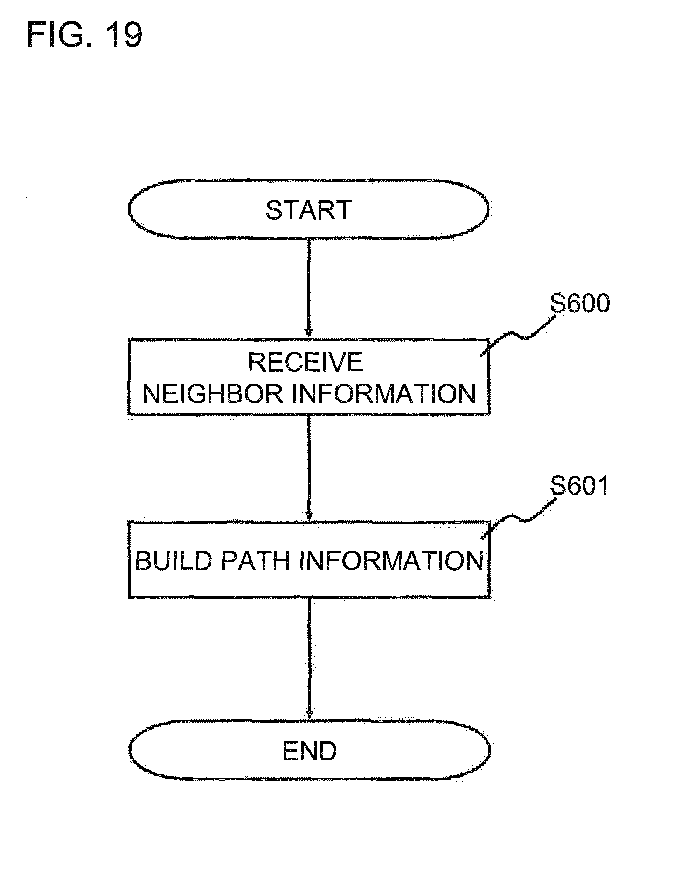

Next, an operation of the path management server 500 is described. Fig. 19 is a flowchart representing processing of the path management server 500 that receives the abovementioned neighbor information. Referring to Fig. 19, first, when neighbor information transmitted from the edge forwarding node 300 or the internal forwarding node 400 is received at the path information collection unit 520 (step S600), the path management server 500 acquires a local ID and identifier of a neighboring node from the received neighbor information, and uses the acquired information to configure the network topology information to be recorded in the recording unit 540 (step S601).

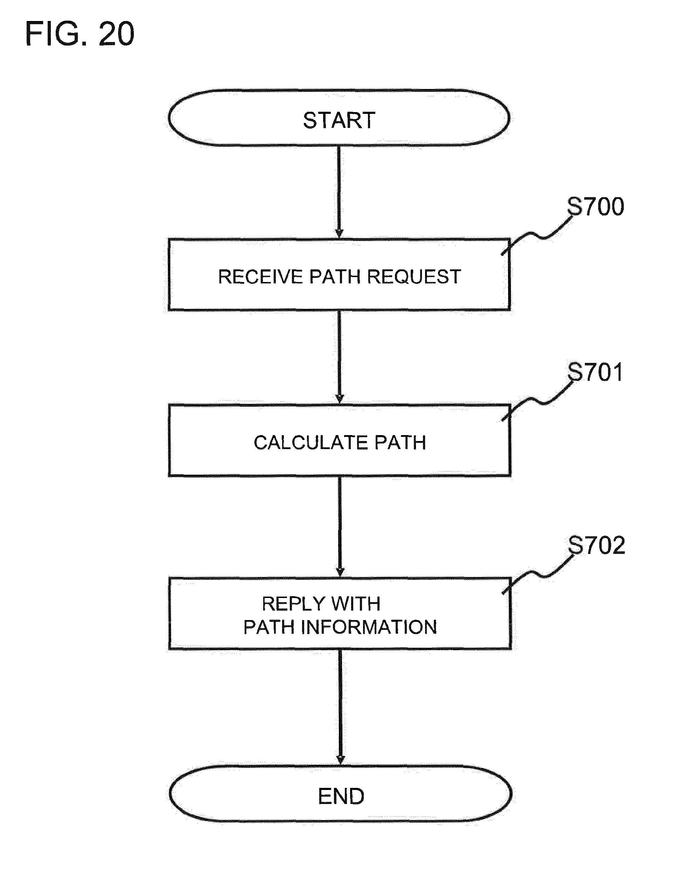

Fig. 20 is a flowchart representing processing of the path management server 500 from which path information is requested from the edge forwarding node 300. Referring to Fig. 20, first when a path request signal is received from the edge forwarding node 300, the path request processing unit 530 provides notification of information included in the path request signal to the path calculation unit 531 (step S700).

Next, the path calculation unit 531 performs calculation of the optimal forwarding path, according to information included in the path request signal notified in step S700, and the network topology information recorded in the path information recording unit 540 (step S701). In this case, giving consideration to a case where there is a failure in forwarding by the forwarding path that has been determined, calculation may be performed for several alternative paths in which path branching occurs at an arbitrary forwarding node in the forwarding path. When the calculation of the forwarding path is complete, the path calculation unit 531 reads a local ID for each one hop in forwarding order for the determined path and alternative paths respectively, and provides notification to the path request processing unit 530.

The path request processing unit 530 that has received a result of the calculation of the forwarding path (including alternative path information in a case where there is an alternative path) sets the forwarding path information that has been notified (arrangement of local IDs) in a path information response signal, to be transmitted to the edge forwarding node 300 that is the source of the path request signal (step S702).

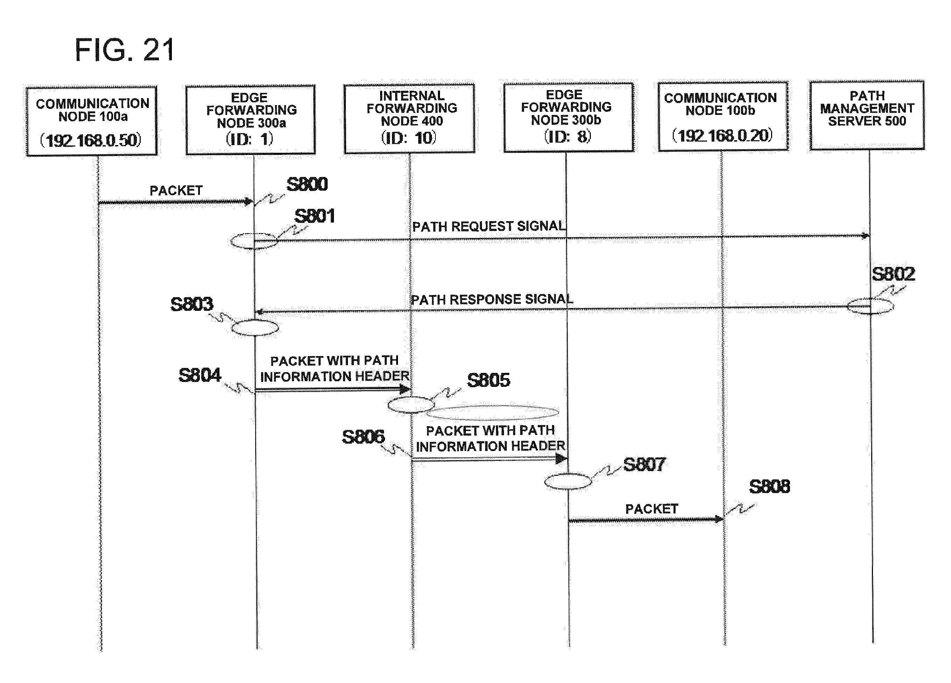

Next, referring to a sequence diagram of Fig. 21, a description is given of a flow sequence in which the communication node 100a, which is an IP node, transmits a packet to the edge forwarding node 300a, sequential forwarding processing thereof is performed, and finally delivery is made to the communication node 100b, which is an IP node.

Here, as an example, a description is given in which a connection state of the respective nodes be as in a network topology that is shown in Fig. 13. The edge forwarding node 300a corresponds to a node with ID = 1 in Fig. 13. The edge forwarding node 300b corresponds to a node with ID = 8 in Fig. 13. The source address of an IP packet is 192.168.0.50, and a destination address is 192.168.0.20. Furthermore, an alternative path is not used.

When the IP packet transmitted from the communication node 100a reaches the edge forwarding node 300a (step S800), the edge forwarding node 300a performs processing in accordance with the flowchart shown in Fig. 14. Here, since a path information header is not assigned to the IP packet, the path information request signal in step S101 of Fig. 14 is transmitted to the path management server 500 (step S801).

The path management server 500 that receives the path information request signal calculates the path information and determining the forwarding path in accordance with a flowchart of Fig. 20, and thereafter transmits the path information response signal to the edge forwarding node 300a (step S802).

In a case of calculating the shortest path without considering link band or congestion state, the forwarding path is calculated as follows. With regard to the shortest path in the network topology of Fig. 13, node ID = 1 -> node ID = 10 -> node ID = 8 -> node 192.168.0.20 (an IP node of an external network that is a destination of the packet) is selected as a forwarding path. Therefore, values of 1, 2, 0, which are link IDs on a path of the network topology of Fig. 13 are contained in the abovementioned order as local IDs, in the path information response signal.

Here, a link ID (= 0) from a node ID = 192.168.0.50 (an IP node of the external network 700) to the node ID = 8, may be included in the path information response. In this case, the storing order of local IDs included in the path information response signal is 0, 1, 2, 0. Conversely, not having the link ID (= 0) to the external network (the communication node 100b) included in the path information response is also possible. In this case, the storing order of the local IDs is 1, 2.

Furthermore, an IP address was used as the ID of the IP node of the external network, but use is also possible as a network address where an arbitrary bit length is extracted from the upper end of the IP address, and layer 2 information such as a MAC (Media Access Control) address and the like or other information may be used.

When the edge forwarding node 300 receives the path information response signal (step S803), in accordance with processing after step S102 in Fig. 14, a path information header is added to the IP packet received in step S800, and thereafter, in step S103 of Fig. 14, in accordance with the assigned path information header, the packet is transmitted from the communication interface corresponding to the local ID (= 1) to be forwarded (step S804). As a result, the packet is forwarded to the internal forwarding node 400 of ID = 10.

On receiving the packet that has been assigned the path information header (step S805), the internal forwarding node 400 performs forwarding processing in accordance with the flowchart shown in Fig. 17 (step S806). Here, in accordance with the forwarding path information, the packet is transmitted from the communication interface corresponding to the local ID (= 2) that is to be forwarded, and the packet is forwarded to the edge forwarding node 300b of ID = 8.

On receiving the packet that has been assigned the path information header (step S807), the edge forwarding node 300b performs processing in accordance with the flowchart shown in Fig. 14. Furthermore, in step S103 of Fig. 14, forwarding processing shown in the flowchart shown in Fig. 15 is additionally implemented. Here, since forwarding to the external network is decided in step S202 of Fig. 15, after the path information header is removed from the received packet, the edge forwarding node 300b, in accordance with the information of the path information header before removal, transmits the packet from the communication interface corresponding to the local ID (= 0) that is to be forwarded (step S808). As a result, the IP packet is finally forwarded to the communication node 100b.

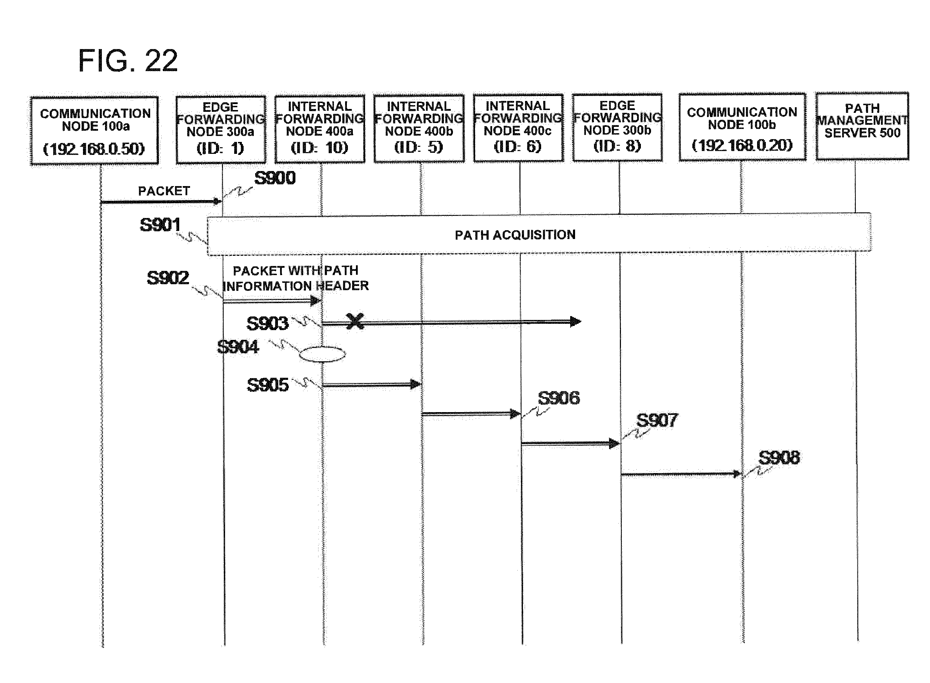

Next, referring to a sequence diagram of Fig. 22, a description is given of a flow sequence in which the communication node 100a, which is an IP node, transmits a packet to the edge forwarding node 300a, sequential forwarding processing thereof is performed, a transmission failure occurs in forwarding by a first calculated optimal path (basic path), and using an alternative path the forwarding succeeds.

In what follows, similar to Fig. 21, a description is given in which a connection state of respective nodes is as in the network topology that is shown in Fig. 13.

When the IP packet transmitted from the communication node 100a reaches the edge forwarding node 300a (step S900), the edge forwarding node 300a acquires path information from the path management server 500 and performs processing to assign a path information header to the IP header (step S901). Step S901 corresponds to step S802 to step S803 in Fig. 21, but here, as path information, it is assumed that in addition to the basic path, two alternative paths could be acquired, in accordance with the following.

Basic path information (a path that is not an alternative path), similar to a case of Fig. 21, is a path of node ID = 1 -> node ID = 10 -> node ID = 8 -> 192.168.0.20.

First alternative path information has a node ID = 10 of the basic path as a branch point, and is a path of node ID = 10 -> nodes ID = 5 -> ID = 6 -> ID = 8 -> node 192.168 0.20.

Second alternative path information has a node of ID = 1 of the basic path as a branch point, and is a path of node ID = 1 -> nodes ID = 5 -> ID = 6 -> ID = 8 -> node 192.168.0.20.

At this time, local ID sequences of the basic path, the first alternative path, and the second alternative path are as follows.
Basic path: 1 (branch point to second alternative path exists), 2 (branch point to first alternative path exists), 0
First alternative path: 3, 1, 3, 0
Second alternative path: 2, 1, 3, 0

As a result, in addition to the path information header in which the abovementioned local IDs are arranged, an alternative path start position information header, and two alternative path information headers in which the abovementioned local IDs are arranged, are assigned to the received IP packet.

In the basic information header, since locations with the local ID = 1 and 2 are branch points to alternative paths, these local IDs are extended local IDs of Fig. 7. An alternative path number of a branch destination is set in each of the 'Alt' fields.

The edge forwarding node 300 transmits a packet from a communication interface corresponding to a local ID (= 1) for forwarding, in accordance with the abovementioned assigned path information header. In this case, since the edge forwarding node (ID =1) has a branch point to an alternative path, the 'Ex' field of the path information header is incremented to become '1'.

The internal forwarding node 400a of node ID = 10 that receives the packet implements forwarding processing in accordance with the flowchart shown in Fig. 17, and transmits the packet from a communication interface corresponding to the local ID (= 2) which is to be forwarded. In this case, since the internal forwarding node 400a has a branch point to an alternative path, the 'Ex' field of the path information header is incremented to become '2'.

Here, a packet forwarding failure at the internal forwarding node 400a is detected ('N' in step S404 of Fig. 17).

In this case, the internal forwarding node 400a confirms whether there is an alternative path. Here, since the 'Ex' field ('2') of the path information header is not '0', a determination is made that an alternative path exists along the path to the forwarding node.

As a result, the internal forwarding node 400a performs setting to forward the packet in a reverse direction as far as a branch point in order to forward the packet by the alternative path, instead of the path information header of the packet ('return setting' in step S406 of Fig. 17). Specifically, the 'D' field and the 'F' field of the path information header are both set to '1'.

Thereafter, the internal forwarding node 400a does not promptly forward the packet in a reverse direction, but re-implements alternative path forwarding decision processing of step S401 of Fig. 17.

Since the forwarding node (ID = 10) is a branch point to the first alternative path, a setting is performed of the value of the path information header in order to transition to the alternative path.

As a result of the alternative path forwarding decision processing shown in Fig. 16 being performed, the 'D' field and the 'F' field of the path information header are promptly reset to '0' and the 'Ex' field is also decremented. As a result the 'Ex' field becomes '1'. With the 'U' field of the local ID, which is being referred to, as '1', in addition in the same way the 'Alt' field of the local ID is copied to the 'Alt' field of the alternative path information header. As a result, '1' is set in the field.

By the above processing, the internal forwarding node 400a and subsequent forwarding nodes execute forwarding processing using the first alternative path. First, since the 'Alt' field of the path information header is '1', the internal forwarding node 400a refers to the local ID of the alternative path information header in which the first alternative path information is set. As a result, since the local ID (link identifier) is '3', the packet is transmitted from the communication interface connected to the link identifier = '3' (step S905). In this case, an amount of the number of bytes of the local ID is added to the 'Current Offset' field of the alternative path header.

As a result of the forwarding, the packet is received at the internal forwarding node 400b (ID = 5). In what follows, reference is made to the local ID at a position shown by the 'Current Offset' of the first alternative path information header, the packet is forwarded in sequence to a forwarding node that is the next hop, and finally the packet is forwarded to the communication node 100b (step S906 to step S908).

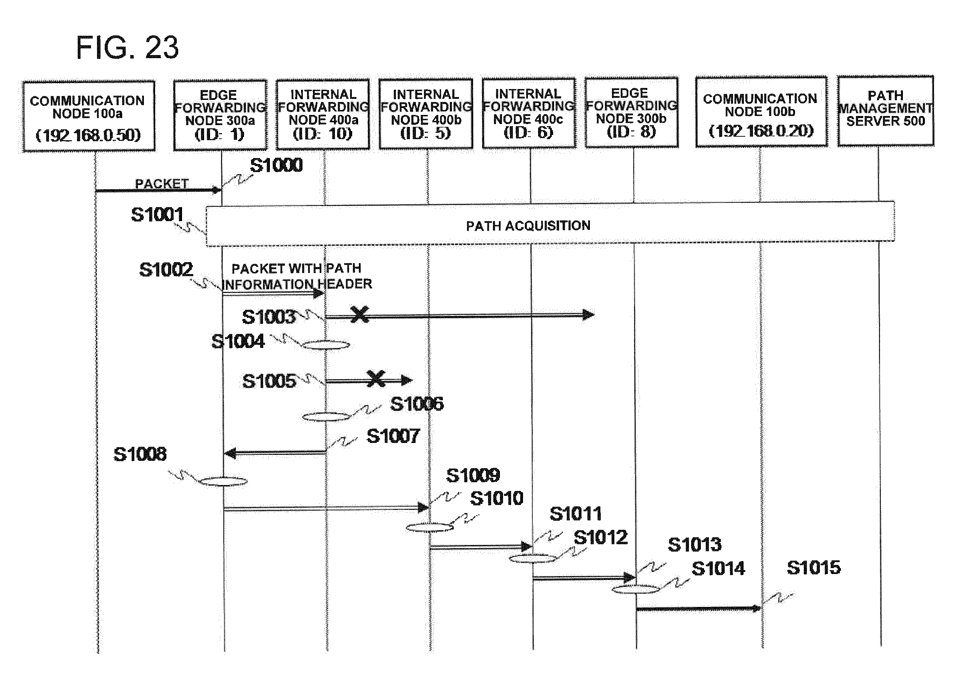

Next, referring to a sequence diagram of Fig. 23, a description is given of a flow sequence in which the communication node 100a, which is an IP node, transmits a packet to the edge forwarding node 300a, and forwarding processing thereof is performing in sequence, but a transmission failure occurs while forwarding by the first calculated optimal path (basic path) and the first alternative path, and the second alternative path is used, so that the forwarding succeeds.

In the following, similar to Fig. 21, a description is given in which a connection state of respective nodes is as in a network topology that is shown in Fig. 13.

Step S1000 to step S1004 of Fig. 23 are entirely the same as step S900 to step S904 of Fig. 22, and a description thereof is omitted.

In step S1005, since the internal forwarding node 400a is a branch point to the first alternative path, reference is made to the local ID of the alternative path information header in which the first alternative path is set. As a result, since the local ID (link identifier) is '3', the packet is transmitted from the communication interface connected to the link identifier = '3'. In this case, the amount of the number of bytes of the local ID is added to the 'Current Offset' field of the alternative path header.

Up to here is the same as step S905, but here a packet forwarding failure in the internal forwarding node 400a is detected ('N' in step S404 of Fig. 17).

In this case, the internal forwarding node 400a confirms whether there is an alternative path (step S1006). Here, since the 'Ex' field ('1') of the path information header is not '0', a determination is made that an alternative path exists along the path to the forwarding node.

As a result, the internal forwarding node 400a performs setting to forward the packet in a reverse direction as far as a branch point, in order to forward the packet by the alternative path, instead of the path information header of the packet ('return setting' in step S406 of Fig. 17). Specifically, the 'D' field and the 'F' field of the path information header are both set to '1'.

Thereafter, the internal forwarding node 400a does not promptly forward the packet in a reverse direction, but re-implements alternative path forwarding decision processing of step S401 of Fig. 17.

In accordance with the alternative path forwarding decision processing shown in Fig. 16, since there is no information of a branch point to another alternative path in a local ID referred to in the first alternative path, a transition is made to 'Y' in step S300 and 'N' of step S301 of Fig. 16, and a decision is made as to whether or not to return to the start point of the alternative path in step S303 of Fig. 16.

In this case, since the 'Current Offset' of the first alternative path information header is '0', a decision can be made of returning to the start point. Accordingly, control advances to step S304 of Fig. 16, and return processing to the original path is executed. The return processing to the original path is performed by copying the value of the 'Frm' field of the first alternative path information header to the 'Alt' field of the path information header.

As a result the 'Alt' field is set to '0', and subsequent forwarding nodes that receive the packet, including the internal forwarding node 400a, perform forwarding processing according to the basic path information (a path that has been set in the path information header).

Following the flowchart of Fig. 16, thereafter a decision is made again as to whether or not there is an unused alternative path in step S301. In the decision here, the local ID of the path information header is used. As a result, there is a path from the internal forwarding node 400a to the first alternative path, but since it is already used ('U' = '1'), control proceeds to 'N' in step S301 of Fig. 16, and then in step S303 of Fig. 16 a decision is made as to whether or not this is a start point for an alternative path. Since the internal forwarding node 400a is not a start point of the basic path and in the first place is not an alternative path, the decision result is 'N', and the alternative path forwarding decision processing is completed.

Thereafter, since the decision of forwarding direction in step S402 of Fig. 17 is 'N' (reverse direction) by the 'D' field being '1', forwarding processing in a reverse direction is executed in step S408 of Fig. 17. As a result, the received packet is transmitted from a communication interface connected to a link identifier = '1' to an edge forwarding node 300a (ID = 1) (step S1007).

Next, in step S1008, when the packet forwarded in the reverse direction is received, the edge forwarding node 300a executes forwarding processing shown in Fig. 15. First, by the alternative path forwarding decision processing of step S200, the received packet is in a reverse direction and there is a forwarding failure (the 'D' field = 1, and the 'F' field = 1), and since there is a further unused alternative path (a second alternative path), transition processing to the alternative path is executed in step S302 of Fig. 16.

Specifically, the 'D' field and the 'F' field of the path information header are set to '0'. Furthermore, similarly the 'Alt' field of the local ID is copied to the 'Alt' field of the path information header, and as a result '2' is set. In addition, the 'U' field in the local ID is set to '1'. Thereafter, in accordance with step S201 and following steps in Fig. 15, forwarding processing of the received packet is performed using the second alternative path information header.

Here, since the first local ID information in the second alternative path information header is '2' (the link identifier = '2'), the packet is transmitted by, among the communication interfaces of the edge forwarding node 300a (ID = 1), a communication interface connected to the link with the link identifier = '2' (step S1009).

The forwarding processing of the packet received in step S1009 by the internal forwarding node 400b (ID = 5) is performed (step S1010). The forwarding procedure refers to the 'Alt' field of the path information header as described heretofore, and since this ('2') is not '0', forwarding using the second alternative path information header is started. A local ID that is to be referred to by the 'Current Offset' field of the second alternative path information header is identified. Since the 'Current Offset' here is 'C1', the 'Local ID #1' of the second alternative path information header is referred to. As described before, since the 'Local ID #1' is '1', the internal forwarding node 400b transmits the packet from a communication interface connected to a link with a link identifier of '1' (step S1011).

Next, an internal forwarding node 400c (ID = 6) performs forwarding processing of the packet transmitted in step S1011 (step S1012). Processing content is the same as the forwarding processing in the internal forwarding node 400b described in step S1010. As a result, the internal forwarding node 400c transmits the packet from a communication interface connected to a link with a link identifier of '3' (step S1013).

Finally in step S1014, the edge forwarding node 300b (ID = 8) performs forwarding processing of a packet transmitted in step S1013. On this occasion, the edge forwarding node 300b executes processing according to the flowchart shown in Fig. 14. Furthermore, in step S103 of Fig. 14, forwarding processing shown in the flowchart shown in Fig. 15 is additionally executed. Here, since forwarding is to an external network, the path information header, the alternative path start position information header, and the alternative path information header are removed in step S210 of Fig. 15, and thereafter the packet is transmitted from a communication interface connected to the external network (step S1015). As a result, the packet is transmitted to the communication node 100b.

According to the present exemplary embodiment as described above, the configuration is such that a forwarding destination is indicated by using a local ID whose uniqueness is ensured in a local range such as within the forwarding node or among neighboring forwarding nodes, not by path information whose uniqueness is assured globally such as by an IP address or the like. As a result, a forwarding path of one hop can be contained in an information amount of about one byte or two bytes, and in a case where information of the forwarding path is contained in the path information header and assigned to the packet, it is possible to curtail overhead due to the assigned header to a very small size. As a result, it becomes possible to contain the path information header in all packets without application limitations.

Furthermore, in the present exemplary embodiment, it is possible to have the number of entries in a forwarding table provided in a forwarding node approximately the number of communication interfaces the respective forwarding nodes are provided with. In addition, it is possible to curtail the size of memory necessary for forwarding nodes and CPU processing power, in order to contain, update, and use the forwarding table, and low cost forwarding nodes are possible.

As a result thereof, according to the present exemplary embodiment, even in a case where the forwarding path is strictly specified for each one hop, it is possible to forward net information with good efficiency, and furthermore at high speed.

In addition, according to the present exemplary embodiment, since the alternative forwarding path information is added to the packet, and the forwarding node is provided with a transition function to an appropriate alternative forwarding path, in a case where a failure occurs in the forwarding path, traffic is heavy, or the like, it is possible to forward the packet to a destination without being affected.

### <Second Exemplary Embodiment>

Next, a detailed description is given concerning a second exemplary embodiment of the present invention in which a modification has been added to the first exemplary embodiment of the present invention, making reference to the drawings.

An overall configuration of the second exemplary embodiment of the present invention has almost the same configuration and functions as the first exemplary embodiment, but modifications are added to an edge forwarding node 301 and an internal forwarding node 401. A description is added below, centered on points of difference thereof.

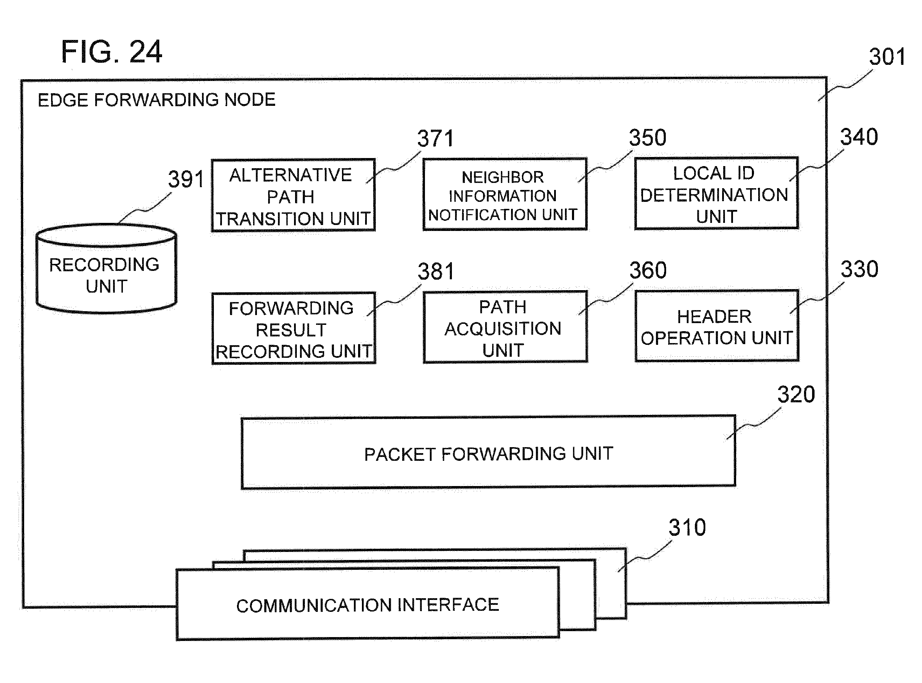

Fig. 24 is a diagram showing a configuration of the edge forwarding node 301 of the second exemplary embodiment of the present invention. Equivalent function blocks are given the same reference symbols as the edge forwarding node 300 of the first exemplary embodiment. A description is given below concerning an alternative path transition unit 371, a forwarding result recording unit 381, and a recording unit 391, that are given reference symbols different from the edge forwarding node 300 of the first exemplary embodiment.

The alternative path transition unit 371 is provided with functions that are almost the same as the alternative path transition unit 370 of the first exemplary embodiment of the present invention, but is further provided with a function for comparing path information (arrangement of local IDs) in a path information header (alternative path information header in a case of using an alternative path) in a received packet, with respective entries of a forwarding failure path information table recorded in the recording unit 391, and in a case where there is a match, a function of regarding the received packet as a packet via an invalid path, and making a transition from the forwarding path to the alternative path or another alternative path.

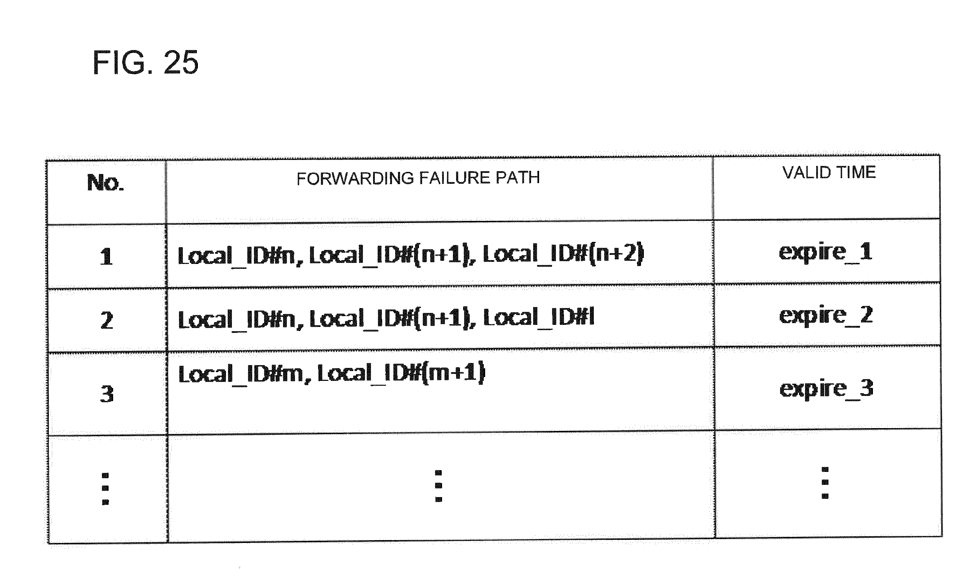

Here, a description is given concerning the forwarding failure path information table recorded in the recording unit 391. The forwarding failure path information table, for example, has a format such as that shown in Fig. 25, and each entry includes information of forwarding failure path and valid time.

The forwarding failure path information is information that lists from a local ID referred to by a forwarding node to a local ID where there is a forwarding failure at a forwarding node at or after the forwarding node. Here, in the local ID of the present exemplary embodiment, only the format is different from the first exemplary embodiment as described below, and the forwarding node where there is a failure is at either of an identifier of a communication interface that has attempted forwarding or a link identifier of a link connected to the communication interface.

In the valid time information, the time indicates that when the valid time recorded here is exceeded, the entry is deleted or made invalid. However, it is also possible not to use the valid time.

The alternative path transition unit 371 is provided with a function such that, in a case of receiving a packet whose forwarding has failed and which has been forwarded in a reverse direction (that is, a packet with '1' in both a 'D' field and an 'F' field), if the forwarding node is a branch point to an alternative path, the received packet is forwarded to the alternative path, and also an entry is added to the forwarding failure path information table using information of a path information header or an alternative path information header of the received packet.

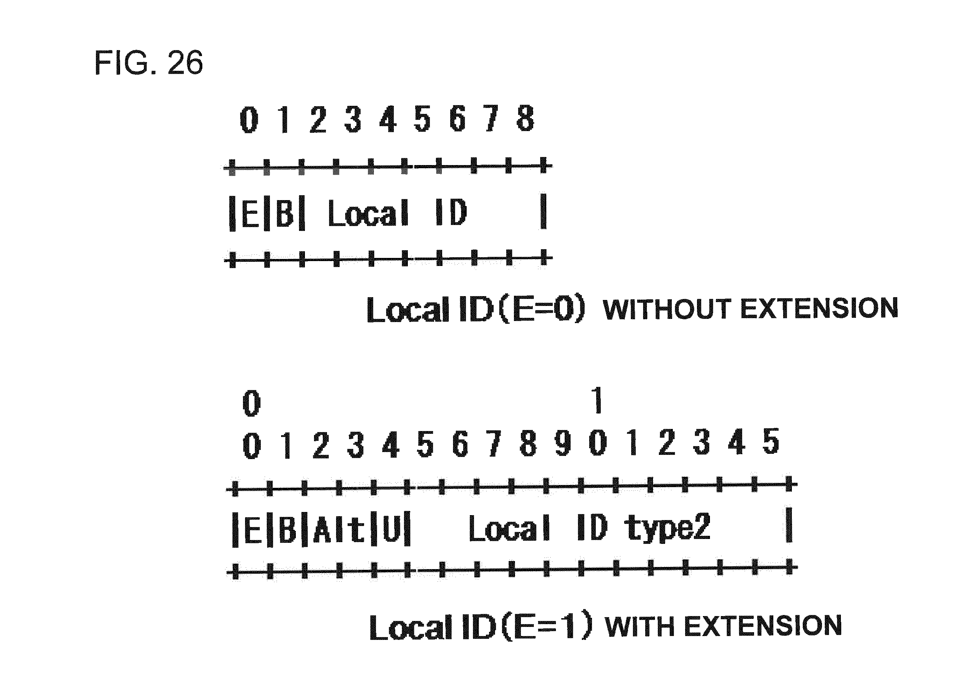

Fig. 26 has a format of a local ID used in the present exemplary embodiment. With regard to the first exemplary embodiment, a 'B' (BrokenLink) field is added to the local ID. In a case where a forwarding failure occurs, a 'B' field of a local ID corresponding to a link identifier or a communication interface identifier where a forwarding failure has occurred, is set to '1'. Therefore it is possible to read from the local ID referred to by the forwarding node, as far as the local ID where there is a forwarding failure, and record in the forwarding failure path information table.

The forwarding result recording unit 381 is provided with a function that is almost the same as the forwarding result recording unit 380 of the first exemplary embodiment of the present invention, but is provided with a function such that, on an occasion of a forwarding failure, in addition to setting the 'D' field and the 'F' field of the path information header to '1', the 'B' field of the local ID, which is referred to when attempting forwarding, is set to '1'.

In addition to a forwarding table that is recorded in the first exemplary embodiment of the present invention, the forwarding failure path information table shown as an example in Fig. 25 is recorded in the recording unit 391.

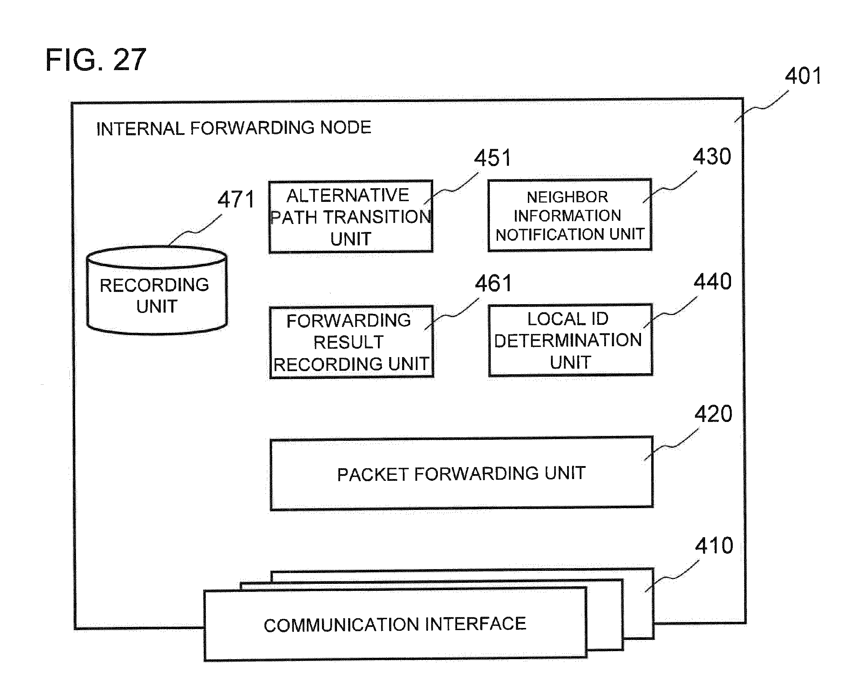

Fig. 27 is a diagram showing a configuration of the internal forwarding node 401 of the second exemplary embodiment of the present invention. Equivalent function blocks are given the same reference symbols as the internal forwarding node 400 of the first exemplary embodiment.

An alternative path transition unit 451, a forwarding result recording unit 461, and a recording unit 471, which are given reference symbols different from the internal forwarding node 400 of the first exemplary embodiment, have the same functions as the alternative path transition unit 371, the forwarding result recording unit 381, and the recording unit 391 of the edge forwarding node 301, respectively, and descriptions thereof are omitted.

Next, a description is given of processing flow when the edge forwarding node 301 and the internal forwarding node 401 in the second exemplary embodiment receive a packet from a neighboring node.

The edge forwarding node 301 and the internal forwarding node 401 both operate approximately the same as the edge forwarding node 300 and the internal forwarding node 400 of the first exemplary embodiment. Differences include alternative path forwarding decision processing shown in Fig. 16, return setting with regard to the edge forwarding node 300 of Fig. 15 (step S206), and return setting with regard to the internal forwarding node 400 of Fig. 17 (step S406). A description is given below, centered on points of difference from the first exemplary embodiment.

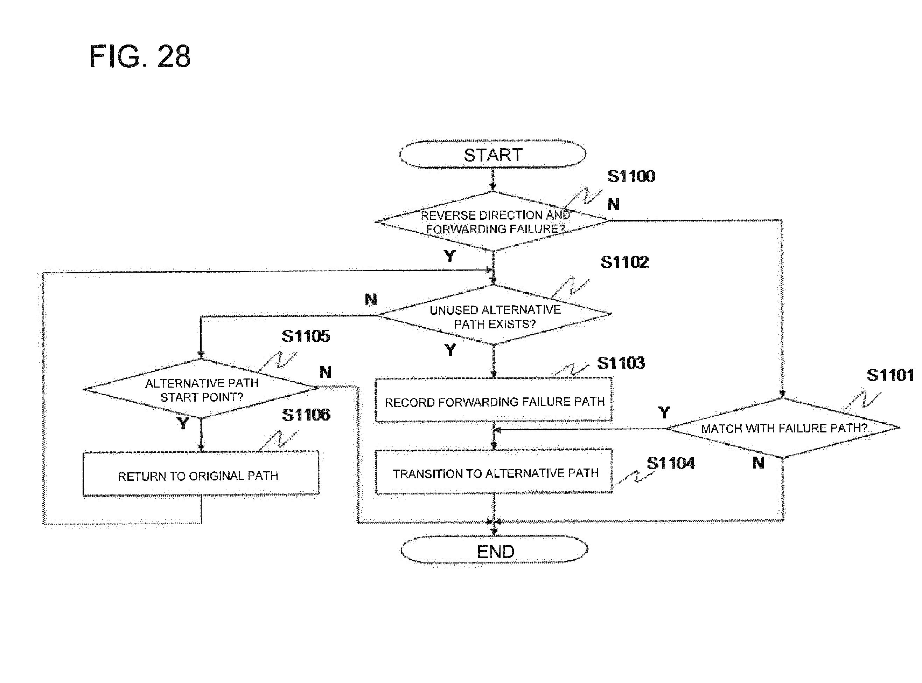

First, using the flowchart shown in Fig. 28, a description is given of the alternative path forwarding decision processing in the second exemplary embodiment of the present invention.

First the forwarding node decides whether or not a received packet is a packet for which a forwarding failure has occurred in the forwarding node or in a forwarding node thereafter in a path via the forwarding node, and which has been returned in a reverse direction to the forwarding node it passed. Specifically, reference is made to the 'D' field and the 'F' field in the path information header of the received packet, and a decision is made as to whether or not the values of both of these are '1'.

In a case where the received packet is not a packet forwarded in a reverse direction due to a failure ('N' in step S1100), the forwarding node compares a local ID presently being referred to in a path information header (an alternative path information header in a case of using an alternative path) of the received packet, and a local ID following this, with respective entries of the forwarding failure path information table shown in Fig. 25 (step S1101). As a result of the comparison, in a case where there is a matching entry, the received packet makes a decision to transition to an alternative path, as a packet that has had a forwarding failure. On the other hand, in a case where there is no matching entry, control proceeds to 'N', and processing is completed ('N' in step S1101).

The processing in the abovementioned step S1101 is processing newly added by the alternative path transition unit 371 and the alternative path transition unit 451 of the second exemplary embodiment of the present invention.

On the other hand, in a case where the received packet is a packet forwarded in a reverse direction due to a failure (the 'D' field and the 'F' field are both '1') ('Y' in step S1100), the forwarding node checks a local ID to be referred to, according to the 'Current Offset' field, and decides whether or not the forwarding node is a branch point where a transition to an alternative path is possible, and whether or not the alternative path is unused (step S1102). Specifically, a decision is made as to whether an 'Alt' field in the local ID ('Local ID #n') is not '0' and a 'U' field is '0'.

As a result of the decision, in a case where the decision is that the forwarding node is a branch point of an unused alternative path ('Y' in step S1102), the forwarding node reads a sequence of local IDs from a local ID referred to by the forwarding node as far as a local ID for which the 'B' (BrokenLink) field is set to '1', from the path information header (in a case of using an alternative path, an alternative path information header), and records this as an entry in the forwarding failure path information table shown in Fig. 25.

The processing in the abovementioned step S1103 is processing newly added by the alternative path transition unit 371 and the alternative path transition unit 451 of the second exemplary embodiment of the present invention.

Next, the forwarding node sets appropriate values in each field of the path information header and the alternative information header in order to forward the packet to the alternative path (step S1104). Specific setting content is the same as for S302 in Fig. 16 and is omitted here. After the setting is completed, the alternative path forwarding decision processing is ended.

On the other hand, in a case where the above mentioned condition has not been satisfied, that is, in a case where the forwarding node is not a branch point to an alternative path, or is a branch point but the alternative path beyond the branch point is a path by which the packet has already been forwarded ('N' in step S1102), the forwarding node makes a decision as to whether or not what is presently referred to is an alternative path information header, and whether the first path information (local ID) therein is being referred to (step S1105). Here, a decision can be made as to whether or not the alternative path information header is being referred to by referring to the 'Alt' field of the path information header. Furthermore, a decision as to whether or not it is the first path information can be made by deciding whether or not the 'Current Offset' of the alternative path information header is '0'.

As a result of the decision, in a case where a decision is made that it is not the first path information of the alternative path, that is, the node itself is not a start pint of the alternative path ('N' in step S1105), the alternative path forwarding decision processing is ended.

As a result of the decision, in a case where a decision is made that it is the first path information of the alternative path, that is, the node itself is a start pint of the alternative path ('Y' in step S1105), the forwarding node executes return processing to the original path. The return processing to the original path is performed by copying the value of the 'Frm' field in the alternative path information header that is presently being referred to, to the 'Alt' field of the path information header.

Next, a description is given of points of difference between return setting processing in the edge forwarding node 301 in the second exemplary embodiment of the present invention and return setting processing (step S206) in the first exemplary embodiment of Fig. 15.

In the return setting processing (step S206 of Fig. 15) in the first exemplary embodiment of the present invention, respective fields of the path information header are set appropriately so that processing is implemented to return the received packet to a forwarding node that is a branch point (it is also possible that the forwarding node is a branch point) to the alternative path. Specifically, the 'D' and the 'F' fields of the path information header are both set to '1'.

However, in the return setting processing of the second exemplary embodiment of the present invention, in addition to the above, processing is performed for setting to '1' the 'B' field of the local ID information referred to when performing forwarding that has resulted in a failure, by the forwarding result recording unit 381.

Next, a description is given of points of difference of the return setting processing in the internal forwarding node 401 of the second exemplary embodiment of the present invention and the return setting processing (step S406 of Fig. 17) of the first exemplary embodiment.

In the return setting processing (step S406 of Fig. 17) in the first exemplary embodiment of the present invention, respective fields of the path information header are set appropriately so that processing is implemented to return the received packet to a forwarding node that is a branch point (a case is also possible where the forwarding node is a branch point) to the alternative path. Specifically, the 'D' and the 'F' fields of the path information header are both set to '1'.

However, in the return setting processing of the second exemplary embodiment of the present invention, in addition to the above, processing is performed for setting to '1' the 'B' field of the local ID information referred to when performing forwarding that has resulted in a failure, by the forwarding result recording unit 461.

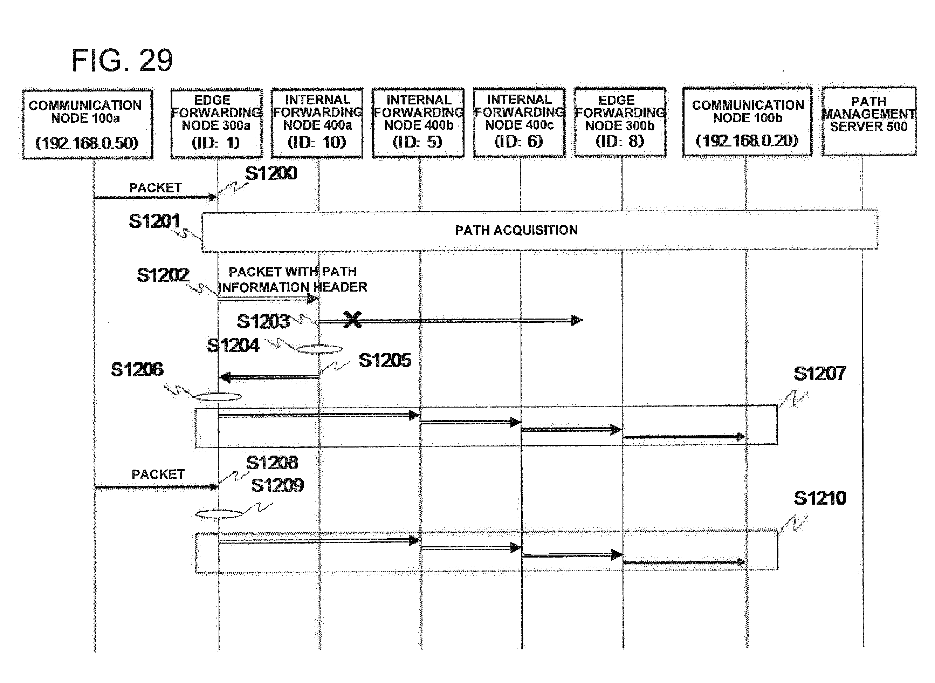

Next, referring to a sequence diagram of Fig. 29, a description is given of processing in which a communication node 100a that is an IP node transmits a packet to the edge forwarding node 300a, sequential forwarding processing thereof is performed, and finally delivery is made to a communication node 100b that is an IP node.

In order to describe the second exemplary embodiment of the present invention more clearly here, a description is given in which a packet is transmitted in the following way.

First, a forwarding failure occurs in forwarding of a first packet, and after the packet is returned to a forwarding node (in this example, the edge forwarding node 300a) that is a branch point to an alternative path, the forwarding is performed by an alternative path.

Next, in a case where a packet transmitted to the communication node 100b from the communication node 100a in the same way is received by the edge forwarding node 300a, since a failure of the packet is predicted, the edge forwarding node 300a promptly performs forwarding, not by a basic path, but by an alternative path.

Referring to Fig. 29, when an IP packet transmitted from the communication node 100a reaches the edge forwarding node 300a (step S1200), the edge forwarding node 300a that has received the IP packet acquires path information from a path management server 500, and executes processing to assign a path information header to the IP header (step S1201).

A description is given below, similar to the first exemplary embodiment, where connection states of respective nodes are as in a network topology shown in Fig. 13, and in the following, besides basic path information, one alternative path is acquired. The basic path information (a path that is not an alternative path) is the path:
node ID = 1 -> node ID = 10 -> node ID = 8 -> node 192.168.0.20 First alternative path information:
With node ID = 1 of the basic path as a branch point, the path of node ID = 1 -> node ID = 10 -> nodes ID = 5 -> ID = 6 -> ID = 8 -> node 192.168.0.20

At this time, local ID sequences of the basic path and the first alternative path are as follows.
Basic path: 1 (branch to the first alternative path exists), 2, 0
First alternative path: 2, 1, 3, 0

As a result, in addition to the path information header, an alternative path start position information header and one alternative path information header are assigned to the received IP packet.

In the basic information header, since the forwarding node referring to a local ID = 1 (edge forwarding node 300a) is a branch point to the first alternative path, local IDs thereof are local IDs with an extension ('E' = '1') of the lower level of Fig. 26, and an alternative path number beyond the branch is set to the 'Alt' field in the local IDs.

Next, the edge forwarding node 300a transmits a packet from a communication interface connected to a link shown by the local ID (link identifier), which is to be forwarded, in accordance with an assigned path information header. In this case, since the edge forwarding node 300a has a branch point to an alternative path, the 'Ex' field of the path information header is incremented to become '1'.

Thereafter, the packet is forwarded to the internal forwarding node 400a (ID = 10). Next, the internal forwarding node 400a that has received the packet, to which the path information header is assigned, executes forwarding processing in accordance with a flowchart shown in Fig. 17, and transmits the packet from a communication interface connected to a link identifier = 2 (step S1203).

Here, it is assumed that a packet forwarding failure at the internal forwarding node 400a be detected ('N' in step S404 of Fig. 17). In this case, in step S1204 confirmation is made as to the existence of an alternative path. Here, since the 'Ex' field ('1') of the path information header is not '0', a determination is made that an alternative path exists along the path to the forwarding node.

As a result, since the packet is forwarded by the alternative path instead of the path information header of the packet, a setting is performed to forward the packet in a reverse direction back to the branch point (step S1204). Specifically, the 'D' field and the 'F' field of the path information header are both set to '1'.

In addition, the 'B' field of the local ID referred to when performing forwarding that has failed here is also set to '1'. It is to be noted that the 'B' field of the local ID having a local ID = '2' in this example is set to '1'.

As a result of the processing, the internal forwarding node 400a forwards the packet in a reverse direction (step S1205).

The edge forwarding node 300a that receives the packet forwarded in the reverse direction, as in forwarding processing of the edge forwarding node shown in Fig. 15, first executes alternative path forwarding decision processing of step S200 (step S1206). As a result, since reverse direction forwarding and a forwarding failure occur (the 'D' field = 1, and the 'F' field = 1), and furthermore, there is an unused alternative path (the first alternative path), a decision is made to transition to the alternative path.

At this time, in step S1103 of Fig. 28, an entry is added to the forwarding failure path information table of Fig. 25. In a case of this example, a forwarding failure path of {1, 2} is described in an added entry. Thereafter, transition processing to the alternative path is implemented in step S1104.

Specifically, the 'D' field and the 'F' field of the path information header are set to '0'. The 'Alt' field of the local ID is copied to the 'Alt' field, and as a result '1' is set. In addition, the 'U' field in the local ID is set to '1'. Thereafter, in accordance with step S201 and following steps in Fig. 15, forwarding processing of the received packet is performed using the first alternative path information header. The packet is forwarded among a plurality of forwarding nodes according to a procedure described heretofore, and is ultimately transmitted to the communication node 100b (step S1207).

Thereafter, in a case where another IP packet transmitted to the communication node 100b from the communication node 100a reaches the edge forwarding node 300a (step S1208), the edge forwarding node 300a makes an enquiry regarding the forwarding path to the path management server 500 similarly to step S1201 described above, and acquires the path information. However, by storing path information acquired in step S1201 in a cache, when IP packets with similar values of destination IP address or the like are received, it is possible to use the cache information and omit the enquiry to the path management server 500. In any case, it is assumed that it is possible to acquire path information the same as in step S1201 here, and the path information header, the alternative path start position information header, and the alternative path information header, configured using the path information, are assigned to the IP packet.

After the headers have been assigned, the edge forwarding node 300a executes the forwarding processing in accordance with the flowchart of Fig. 15, but first the alternative path forwarding decision processing is executed in step S200 (step S1209).

The alternative path forwarding decision processing here is a flow shown in the flowchart shown in Fig. 28. Since the packet to which the headers are assigned is in a normal direction and there is no forwarding failure, control proceeds to 'N' in step S1100 of Fig. 28, and step S1101 is processed. In step S1101, as described above, the path information header of the packet and the entries of the forwarding failure path information table of Fig. 25 are compared, and a check is made as to whether or not there is a matching entry.

As described above, an entry in which a forwarding failure path is {1, 2} exists in the forwarding failure path information table. On the other hand, in the forwarding path information in the path information header assigned to the packet, the order of local IDs is {1, 2, 0} in a case where a local ID, referred to when the edge forwarding node 300a is forwarded, is a start point.

As a result of the comparison, since a portion of {1, 2} matches, in step S1101 described above, control proceeds to 'Y', and step S1104 is processed. That is, the received packet is not forwarded to the internal forwarding node 400a, the forwarding path can be switched promptly to an alternative path, and high efficiency forwarding is possible. The packet is transmitted ultimately to the communication node 100b by the alternative path (step S1210).

According to the second exemplary embodiment of the present invention as above, in addition to an effect of the first exemplary embodiment, when the packet to which the path information header is assigned, for which a forwarding failure is predicted, is received, it is possible to promptly forward the packet to an alternative path. As a result, it is possible not only to curtail service interruption time, but also to avoid wasted forwarding, and to efficiently use link bandwidth and processing capability.

A description has been given above of preferred exemplary embodiments of the present invention, but the present invention is not limited to the abovementioned exemplary embodiments, and further modifications, substitutions, and adjustments can be added within a scope that does not depart from a fundamental technological concept of the present invention. For example, in each of the abovementioned exemplary embodiments, a description has been given using link IDs shared among neighboring nodes at both ends of links, but it is also possible to use identifiers of communication interfaces as local IDs.

In addition, instead of a link ID or a communication interface identifier, it is possible to use a modified configuration in which a third local ID is used as an index number, and this is attached to the link ID and the communication interface.

Furthermore, for example, in the abovementioned exemplary embodiments a description was given in which each of the forwarding nodes is provided with a local ID determination unit, and each local ID is determined, but it is possible to use a configuration in which, in a case where it is possible to obtain configuration information of each forwarding node in the path management server, the path management server determines the local ID and records a forwarding table in the recording unit of each thereof. In this case, it is possible to omit the local ID determination unit of each of the forwarding nodes. Moreover, in a case where the path management server can obtain connection relationships of each of the forwarding nodes and it is possible to set local IDs such that neighboring nodes are not duplicated, it is possible to omit the neighbor information notification unit of each of the forwarding nodes.

Furthermore, the path management server 500 of the abovementioned exemplary embodiments can be realized by an OpenFlow controller of Non-Patent Document 1, and in this case, the forwarding nodes can be realized by an OpenFlow switch.

The path management server 500 of the abovementioned exemplary embodiments can be realized as a dedicated server, and outside of the abovementioned OpenFlow switch, implementation of the forwarding nodes is possible by a router in an IP network, or an MPLS switch in an MPLS network. Otherwise, as long as the network is such that a server can perform central control of forwarding nodes in the network, application of the present invention is possible.

### INDUSTRIAL APPLICABILITY

In a commercial network such as a data center, it is necessary to strictly control forwarding paths of packets according to various conditions such as destination address, source address, and protocol used, for purposes of QoS (Quality of Service) or load sharing. According to the present invention, it is possible to strictly specify a forwarding path while curtailing packet overhead, without increasing path information. Furthermore, it is important to continue service even when a link failure occurs. In a communication system of the present invention, it is possible to build a network system in which packet overheads are curtailed without increasing path information and strict specification of forwarding path is possible, and even in a case where a failure occurs in a specific link it is possible to forward a packet using several alternative paths contained in a header, with the system excelling in fault tolerance and availability. Therefore, the present invention can be preferably applied to commercial networks such as a data center. It is to be noted that modifications and adjustments of embodiments and examples are possible within the bounds of the entire disclosure (including the scope of the claims) of the present invention, and also based on fundamental technological concepts thereof. Furthermore, a wide variety of combinations and selections of various disclosed elements is possible within the scope of the claims of the present invention. That is, the present invention clearly includes every type of transformation and modification that a person skilled in the art can realize according to the entire disclosure including the scope of the claims and to technological concepts thereof.

Finally, inventions that can be incorporated in the scope of the claims of the present invention are appended.

### (Further mode 1)

In the abovementioned communication system, the forwarding result recording unit may use identifiers for identifying a communication interface used by forwarding nodes where the forwarding has failed within a packet, or a link established between neighboring nodes, to generate and record forwarding path information in which the forwarding failure has occurred.

### (Further mode 2)

The abovementioned forwarding node may additionally refer to path selection information indicative of which of a plurality of forwarding path information items within a packet is used, to determine forwarding path information used in forwarding processing of the packet.

### (Further mode 3)

The abovementioned forwarding node may use information for determining a forwarding node at which branching is possible from one forwarding path to another forwarding path, included in a packet, to switch the forwarding path to a different forwarding path.

### (Further mode 4)

The abovementioned forwarding node may refer to the forwarding result information updated accordance to a result of forwarding processing, included in a packet, to select forwarding path information where forwarding has not failed.

### (Further mode 5)

The abovementioned forwarding node may reduce, in a case of a failure in forwarding processing, branch point information, included in the packet indicative of a member of forwarding nodes branchable from a present forwarding path to a different forwarding paths), with regard to a forwarding path extending up to a forwarding node that has received the packet, and determine whether or not to drop the packet using the branch point information.

### (Further mode 6)

The abovementioned forwarding node may comprise a forwarding result recording unit that records forwarding path information where a forwarding failure has occurred, and when a packet is received, compare the forwarding path information stored in the packet and the recorded path information where a forwarding failure has occurred, and, in a case where a forwarding failure is predicted, switch to another forwarding path.

### (Further mode 7)

In the abovementioned forwarding node, the forwarding result recording unit may use identifiers for identifying a communication interface used by a forwarding node where the forwarding has failed within a packet, or a link established between neighboring nodes, to generate and record forwarding path information in which the forwarding failure has occurred.

### (Further mode 8)

The abovementioned forwarding node (edge forwarding node) may use, in a case where a packet is received that does not include the forwarding path information, a plurality of forwarding path information items where the packet is made to reach a communication partner, obtained by making an enquiry to a path management server, and to contain the plurality of forwarding path information items in the packet.

### EXPLANATIONS OF SYMBOLS

- 100, 100a, 100b: communication node
- 200: forwarding node
- 300, 300a, 300b, 301, 301a, 301b: edge forwarding node
- 310: communication interface
- 320: packet forwarding unit
- 330: header operation unit
- 340: local ID determination unit
- 350: neighbor information notification unit
- 360: path acquisition unit
- 370, 371: alternative path transition unit
- 3 80, 381: forwarding result recording unit
- 390, 391: recording unit
- 400: internal forwarding node
- 410: communication interface
- 420: packet forwarding unit
- 430: local ID determination unit
- 440: neighbor information notification unit
- 450, 451: alternative path transition unit
- 460, 461: forwarding result recording unit
- 470, 471: recording unit
- 500: path management server
- 510: communication interface
- 520: path information collection unit
- 530: path request processing unit
- 531: path calculation unit
- 540: path information recording unit
- 600: data forwarding network
- 700: external network

## Claims

1. A communication system comprising:
a path management server that generates a plurality of forwarding path information items each includes a sequence of identifiers, each of which identifies a communication interface provided in each of a plurality of forwarding nodes on a forwarding path in a data forwarding network or a link established between the forwarding node and a neighboring node thereof; and
a forwarding node that, in accordance with at least one of the plurality of forwarding path information items, executes a packet forwarding processing of a packet with a header including the plurality of forwarding path information items.

2. The communication system according to claim 1, wherein
the packet stores path selection information indicative of which of the plurality of forwarding path information items is utilized, and
the forwarding node refers to the path selection information to determine forwarding path information to be used in the packet forwarding processing.

3. The communication system according to claim 1 or 2, wherein
the plurality of forwarding path information items include information for determining a forwarding node at which branching is possible from one forwarding path to another forwarding path; and
a forwarding node at a position at which the branching is possible selects at least one of the plurality of forwarding path information items.

4. The communication system according to any one of claims 1 to 3, wherein
the packet stores forwarding result information indicative of a forwarding result when a forwarding node performs a forwarding processing based on forwarding path information determined by the path selection information; and
the forwarding node refers to the forwarding result information updated according to a result of forwarding processing to select forwarding path information in which there is no failure in forwarding.

5. The communication system according to any one of claims 1 to 4, wherein
the packet can store branch point information indicative of a member of forwarding nodes branchable from a present forwarding path to a different forwarding path(s), on a forwarding path that extends up to a forwarding node that has received the packet; and
the forwarding node reduces the branch point information when a forwarding processing is failed and determines whether or not to drop the packet using the branch point information.

6. The communication system according to any one of claims 1 to 5, wherein
upon changing a forwarding path, the packet stores information that identifies forwarding path information before the change; and
the forwarding node uses the forwarding path information before the change included in the packet to perform a return processing to a forwarding path before the change, and to search for a further branch destination.

7. The communication system according to any one of claims 1 to 6, wherein
the forwarding node further comprises a forwarding result recording unit that records forwarding path information where a forwarding failure has occurred; and
upon receiving a packet, the forwarding node compares the forwarding path information contained in the packet and the recorded forwarding path information where a forwarding failure has occurred, and when a forwarding failure is expected, switches from a present forwarding path to another forwarding path.

8. A forwarding node, connected to a path management server that generates a plurality of forwarding path information items each includes a sequence of identifiers, each of which identifies a communication interface provided in each of a plurality of forwarding nodes on a forwarding path in a data forwarding network or a link established between the forwarding node and a neighboring node thereof, wherein
the forwarding node, in accordance with at least one of the plurality of forwarding path information items, executes a packet forwarding processing of a packet with a header including the plurality of forwarding path information items.

9. A path management server that, upon receiving a path request from the forwarding node according to claim 8, replies, based on information included in the path request, with a plurality of forwarding path information items by which the packet is made to reach a communication partner.

10. A communication method comprising:
by a path management server in a data forwarding network, upon receiving a path request from a forwarding node, replying, based on information included in the path request, with a plurality of forwarding path information items each includes a sequence of identifiers, each of which identifies a communication interface provided in each of a plurality of forwarding nodes on a forwarding path in the data forwarding network or a link established between the forwarding node and a neighboring node thereof; and
by a forwarding node group that is on a forwarding path selected from among the plurality of forwarding path information items and includes the forwarding node, sequentially forwarding a packet in accordance with the selected forwarding path information.
